# EUROPÄISCHE PATENTSCHRIFT

(11) **EP 3 707 834 B1**
(45) Veröffentlichungstag und Bekanntmachung des Hinweises auf die Patenterteilung: **15.12.2021**
(21) Anmeldenummer: 18799736.6
(22) Anmeldetag: 06.11.2018
(51) Int. Cl.: H04B 17/382

(54) **VERFAHREN UND VORRICHTUNGEN ZUR ERMITTLUNG EINES FREQUENZBEREICHS EINES ZU ÜBERTRAGENDEN SIGNALS**
METHOD AND DEVICES FOR DETERMINING A FREQUENCY RANGE OF A SIGNAL TO BE TRANSMITTED
PROCÉDÉS ET DISPOSITIFS DE DÉTERMINATION D'UN DOMAINE DE FRÉQUENCE D'UN SIGNAL À TRANSMETTRE

(30) Priorität: 06.11.2017 DE 102017219690
(43) Veröffentlichungstag der Anmeldung: 16.09.2020
(73) Patentinhaber: Molex CVS Dabendorf GmbH, 15806 Zossen (DE)
(72) Erfinder: KAUTGE, Helmut, 14532 Stahndorf (DE); LEHMANN, Lars, 15745 Wildau (DE); NAST, Helmut, 12557 Berlin (DE); SAYED, Ahmed, 12355 Berlin (DE); HECHT, Josef, 91058 Erlangen (DE)
(74) Vertreter: Bardehle Pagenberg Partnerschaft mbB Patentanwälte Rechtsanwälte
(86) Internationale Anmeldenummer: PCT/EP2018/080305
(87) Internationale Veröffentlichungsnummer: WO 2019/086703

(56) Entgegenhaltungen:
- WO-A1-2008/054392
- DE-A1-102014 213 933
- US-A1- 2016 182 165

## Beschreibung

Die Erfindung betrifft ein Verfahren zur Verstärkung von Funksignalen zwischen einem Endgerät und einer Antenne oder einem Antennenanschluss sowie eine Schaltungsanordnung zum Ausführen eines solchen Verfahrens. Insbesondere dient die Verstärkung dazu, eine zwischen dem Endgerät und der Antenne auftretende Dämpfung der Signalübertragung bei Sende- und/oder Empfangssignalen zu kompensieren.

Solche Schaltungsanordnungen werden beispielsweise bei dem Betrieb von Endgeräten, beispielsweise in der Form von Mobiltelefonen, in Kraftfahrzeugen genutzt. Durch die Schaltungsanordnung soll der Empfang des Mobiltelefons im Inneren des Kraftfahrzeugs verbessert werden.

Bei einem beispielhaften Szenario ist das Mobiltelefon mit Hilfe der Schaltungsanordnung und einer Hochfrequenzleitung mit einer externen Antenne des Kraftfahrzeugs verbunden. In dem Fall gilt es die Dämpfung der Signalübertragung zwischen dem Mobiltelefon und der externen Antenne des Kraftfahrzeugs zu kompensieren. Die Anbindung des Mobiltelefons an die externe Antenne kann sowohl kabelgebunden als auch kabellos erfolgen. Bei der kabelgebundenen Anbindung muss die Dämpfung des Kabels, der Hochfrequenzleitung und ggf. weiterer Bauteile der Schaltungsanordnung oder mit ihr verbundener Bauteile ausgeglichen werden. Üblicherweise ist diese Dämpfung bekannt und/oder eindeutig ermittelbar. Bei der kabellosen Anbindung ist zusätzlich die Dämpfung, die auf der Luftschnittstelle auftritt, zu berücksichtigen. Diese ist üblicherweise variabel und erfordert eine adaptive Anpassung der Verstärkung. Denkbar ist auch ein beispielhaftes Szenario, bei dem es Aufgabe der Schaltungsanordnung ist, Signale des Mobiltelefons zu verstärken, im Rahmen der Leistungsgrenzen, die der jeweilige Mobilfunkstandard vorsieht.

Moderne Mobiltelefone unterstützen in der Regel eine Vielzahl von Kommunikationsstandards in unterschiedlichen Frequenzbereichen, wie beispielsweise Global System for Mobile Communications (GSM), Universal Mobile Telecommunications System (UMTS), Long Term Evolution (LTE) usw., die unterschiedliche Übertragungsverfahren verwenden. Um einen zuverlässigen Betrieb bei Verwendung unterschiedlicher Kommunikationsstandards bereitstellen zu können, muss die Schaltungsanordnung diese unterschiedlichen Standards und/oder Trägerfrequenzen unterstützen. Das bedeutet, dass die Schaltungsanordnung für die unterschiedlichen Frequenzbereiche spezifisch angepasste Verstärker bereitstellen muss. Da aktivierte Verstärker jedoch den Frequenzbereich eines anderen Verstärkers stören können, ist es üblicherweise erforderlich, nur den vom Endgerät aktuell genutzten Frequenzbereich zu verstärken. Daneben ist der Leistungsverbrauch ein weiterer Aspekt. Die Verstärker der nicht-verwendeten Frequenzbereiche sollten daher nicht aktiviert sein. Es lässt sich allgemein sagen, dass vorzugsweise nur die gerade benötigten Verstärkerpfade eingeschaltet werden, um den Schaltungsaufwand, gegenseitige Störungen und den Leistungsverbrauch zu minimieren. Möglich ist es auch, den oder die nicht-benötigten Signalpfade durch entsprechende vor- und/oder nachgeschaltete Schalter wegzuschalten. Beispielsweise bedeutet dies, dass wenn ein Sendesignal in einem bestimmten Frequenzband detektiert wird, der entsprechende Sendeverstärkerpfad zugeschaltet wird, und die anderen Signalpfade weggeschaltet und/oder deren Verstärker stromlos geschaltet werden.

Damit die richtige Verstärkungsschaltung für den benötigten Frequenzbereich aktiviert wird, muss die Schaltungsanordnung somit in der Lage sein, erkennen zu können, in welchem Frequenzbereich übertragen wird, also welcher Standard und/oder welche Trägerfrequenz gerade verwendet wird. Erst dann kann die Schaltungsanordnung für diesen Frequenzbereich konfiguriert werden. Die Erkennung des Frequenzbereichs erfolgt beispielsweise durch Detektionseinheiten, die das zu verstärkende Signal analysieren und daraufhin den entsprechenden Frequenzbereich ermitteln. Aufgrund dieses ermittelten Frequenzbereichs kann dann die Schaltungsanordnung konfiguriert werden, beispielsweise durch Schalten von jeweiligen Signalzweigen, welche Verstärker für den entsprechenden Frequenzbereich beinhalten. In der Regel wird für die Ermittlung des entsprechenden Frequenzbereichs ein von dem Endgerät gesendetes Signal ausgewertet. Die Verstärkungsschaltungen werden daraufhin sowohl für den Sendebetrieb als auch den Empfangsbetrieb konfiguriert. In dem Fall, in dem kein Sendesignal des Endgeräts erfasst wird, findet auch keine Verstärkung spezifischer Frequenzbereiche von Sendesignalen statt. Stattdessen werden in dem Fall vorzugsweise alle unterstützten Empfangsbänder von der Antenne in Richtung Endgerät verstärkt, bei deaktivierten Sendepfaden. Dies kann z.B. mit Hilfe einer voreingestellten, ggf. für mehrere Frequenzbereiche geeigneten Verstärkung geschehen. Denkbar ist auch, die Empfangssignale transparent, also ohne Verstärkung von der Antenne zu dem Endgerät zu leiten.

In der deutschen Offenlegungsschrift DE 10 2006 010 963 A1 wird eine Schaltungsanordnung beschrieben, die eine Detektion eines entsprechenden Frequenzbereichs und eine dazugehörige Konfiguration der Verstärkungsschaltung ermöglicht. Die Detektion erfolgt anhand mehrerer Detektoren, die für spezifische Frequenzbereiche ausgelegt sind. Insbesondere werden getrennte Detektoren für die GSM-Technologie sowie für die UMTS-Technologie verwendet. Die Verwendung von mehreren Detektoren hat insbesondere bei Multiband-Systemen jedoch den Nachteil, dass die Schaltungsanordnung komplex ausgestaltet ist und weniger flexibel für eine Erweiterung im Hinblick auf die Detektion von Sendesignalen neuerer Funkstandards ist.

Zur Behebung dieses Nachteils schlägt die deutsche Offenlegungsschrift DE 10 2009 027 358 A1 eine Einführung eines "Pollingbetriebs" vor, der den schaltungstechnischen Aufwand durch Verwendung von nur einem einzigen Detektor reduzieren soll. Dieser Pollingbetrieb ermöglicht unterschiedliche Signalzweige, die für unterschiedliche Frequenzbereiche ausgestaltet sind, mit dem Detektor zu verbinden. Hierdurch wird die Verwendung von nur einem einzigen Detektor für alle unterschiedlichen Frequenzbereiche, beispielsweise verschiedener Mobilfunkstandards, ermöglicht.

Ein entscheidender Nachteil des in dieser Druckschrift beschriebenen Pollingbetriebs besteht jedoch darin, dass moderne Handover-Verfahren, wie Inter-band Handover oder Inter-frequency Handover unzureichend unterstützt werden. Bei derartigen Handover wechselt das Mobiltelefon beispielsweise während einer laufenden Kommunikation in einen anderen Frequenzbereich. Auch sind moderne Mobiltelefone in der Lage, zwischen mehreren Kommunikationsstandards zu wechseln, z.B. durch ein sog. Inter-RAT-Handover (RAT = Radio Access Technology), bei denen gegebenenfalls auch ein Wechsel in ein anderes Frequenzband stattfindet. Handover-Verfahren, bei denen das Mobiltelefon beispielsweise während einer laufenden Kommunikation in einen anderen Frequenzbereich wechselt, werden nachfolgend einheitlich als "Interband Handover" bezeichnet. Die in der genannten Offenlegungsschrift DE 10 2009 027 358 A1 offenbarte Schaltungsanordnung eignet sich hierfür nicht, da die Detektionseinheit ein aufgefundenes Signal zwar permanent überwacht, jedoch in der spezifischen Verstärkungskonfiguration solange verharrt, wie ein verwertbares Signal in dem Signalzweig detektiert wird. Damit wird ein vom Mobiltelefon verwendetes Signal in einem anderen Frequenzbereich nicht bzw. erst sehr spät erkannt.

Ein zuverlässiger Betrieb der Schaltungsanordnung setzt jedoch eine zuverlässige Bestimmung des aktiven Bands, also des Frequenzbereichs, voraus. Demnach muss die Schaltungsanordnung in der Lage sein, Signalleistungspegel in den einzelnen Frequenzbereichen ständig, also auch während einer laufenden Übertragung, zu überwachen und zu vergleichen. In der Praxis hat es sich als schwierig erwiesen, dass die Schaltungsanordnung während der laufenden Übertragung einen Bandwechsel erkennt, da die erforderliche Frequenzentkopplung der Filter hier sehr groß sein muss. Alternativ wäre es bei der Schaltungsanordnung der deutschen Offenlegungsschrift DE 10 2009 027 358 A1 zunächst erforderlich, für jeden Frequenzbereich eine eigene Detektoreinheit einzuführen, da die Auswertung mittels einer einzigen Detektoreinheit die kontinuierliche Fortführung des Pollingbetriebs voraussetzt, was jedoch zu einer Unterbrechung der Signalübertragung führen würde. Die Einführung mehrerer Detektoreinheiten würde jedoch alleine noch keine ausreichende Lösung bieten, da jedes Schalten den HF-Pfad unterbricht, d.h. es wären weitere konzeptionelle Neuanordnungen erforderlich. Außerdem würde das Vorsehen mehrerer Detektoreinheiten wiederum zu der unerwünschten Schaltungskomplexität, wie sie in der Druckschrift DE 10 2006 010 963 A1 vorhanden ist, führen.

Ein weiterer Nachteil der oben genannten Schaltungsanordnung besteht darin, dass bei Abwesenheit eines Sendesignals die verschiedenen Signalzweige, die unterschiedlichen Frequenzbereichen entsprechen, fortlaufend durchgeschaltet werden und somit eine Synchronisation auf den Startzeitpunkt des Sendesignals nicht möglich ist.

DE 10 2014 213933 A1 betrifft ein Verfahren zum Betrieb einer Signalkopplungseinrichtung und eine Signalkopplungseinrichtung, wobei die Signalkopplungseinrichtung mindestens einen Signalzweigabschnitt umfasst, der signaltechnisch mit einer endgeräteseitigen Schnittstelle der Signalkopplungseinrichtung verbunden oder verbindbar ist, wobei mindestens eine Signaleigenschaft eines auf dem mindestens einen Signalzweigabschnitt anliegenden Signals bestimmt wird, wobei in Abhängigkeit der mindestens einen Signaleigenschaft eine Signalart bestimmt wird, wobei als Signalart ein Zeitduplex-Signal oder ein Frequenzduplex-Signal bestimmt wird, wobei in Abhängigkeit der Signalart eine signalartspezifische Verbindung zwischen der endgeräteseitigen Schnittstelle und einer antennenseitigen Schnittstelle der Signalkopplungseinrichtung hergestellt wird und/oder eine signalartspezifische Steuerung eines Betriebs mindestens einer Signalverarbeitungseinrichtung erfolgt.

Der Erfindung liegt demnach die Aufgabe zugrunde, eine Schaltungsanordnung und ein entsprechendes Verfahren zur Verstärkung von Funksignalen zwischen einem Endgerät und einer Antenne bereitzustellen, die die genannten modernen Handover-Verfahren im laufenden Betrieb ohne wesentliche zeitliche Verzögerung erkennen und unterstützen. Insbesondere ist also die Möglichkeit einer dauerhaften Überwachung aller unterstützen Frequenzbereiche vorzusehen, ohne in den laufenden Verstärkungsbetrieb einzugreifen und ohne den schaltungstechnischen Aufwand zu erhöhen.

### Zusammenfassung

Die Aufgabe wird durch das Verfahren sowie die Schaltung der unabhängigen Ansprüche gelöst. Vorteilhafte Ausführungsformen werden in den Unteransprüchen beansprucht.

Das erfindungsgemäße Verfahren zur Verstärkung von Funksignalen zwischen einem Endgerät und einer Antenne oder einem Antennenanschluss mithilfe einer Schaltungsanordnung weist eine Verstärkungseinheit und eine Detektoreinheit, die für unterschiedliche Frequenzbereiche ausgebildete Signalzweige und einen Leistungsdetektor aufweist, auf und umfasst ein Empfangen eines Sendesignals von dem Endgerät, ein Aufteilen des Sendesignals in zumindest einen ersten Signalteil und einen zweiten Signalteil, ein Anlegen des ersten Signalteils an die Signalzweige der Detektoreinheit, ein Ermitteln eines Frequenzbereichs des ersten Signalteils durch zeitlich aufeinanderfolgendes Anlegen der Signalzweige der Detektoreinheit an den Leistungsdetektor zur Auswertung einer Leistung des ersten Signalteils, ein Einstellen der Signalführung für den zweiten Signalteil in der Verstärkungseinheit basierend auf dem durch die Detektoreinheit ermittelten Frequenzbereich und ein Verstärken von zumindest dem zweiten Signalteil mithilfe der Verstärkungseinheit.

Aufgrund der Aufteilung in zumindest zwei Signalteile ist es möglich, die Detektoreinheit unabhängig von der Verstärkungseinheit anzuordnen. Somit kann eine Ermittlung des Frequenzbereichs mit Hilfe der Detektoreinheit, während einer laufenden Übertragung, also während die Verstärkungseinheit Sende- und Empfangssignale verstärkt, durchgeführt werden. Somit wird es dem Endgerät ermöglicht, Handover-Verfahren, wie Inter-band Handover, bei gleichzeitiger optimaler Verstärkung durch die Schaltungsanordnung. Zudem ist somit möglich, dass während der Verstärkung Störsignale, die unter Umständen die Nutzfrequenzzweige der Detektoreinheit überkoppeln, und Inter-Band Carrier Aggregation des Endgeräts (zwei Uplink-Signale in unter-schiedlichen Frequenzbändern) erkannt werden können. Dabei genügt für die erfindungsgemäße Anordnung vorzugsweise die Verwendung von nur einer Detektoreinheit, d.h., die Schaltungskomplexität, wie sie bei der Verwendung mehrerer Detektoreinheiten entstehen würde, wird vermieden. Die Unabhängigkeit der Detektoreinheit von der Verstärkungseinheit hat zudem den Vorteil, dass die Detektoreinheit sowohl andere Frequenzbereiche als auch eine größere Anzahl an Frequenzbereichen untersuchen kann, als die Verstärkungseinheit verstärken soll. Somit kann eine zuverlässige Bestimmung von Nutzsignalen und Störsignalen erfolgen. Vorzugsweise wird das Sendesignal des Endgeräts über eine Funkschnittstelle empfangen. Hierfür kann die Schaltungsanordnung über eine Signalkopplungseinrichtung, also eine Übertragungseinheit, verfügen, die drahtlose Funksendesignale des Endgeräts entgegennimmt und zur weiteren Verarbeitung in eine Hochfrequenzleitung einkoppelt und/oder Empfangssignale des Endgeräts, die z.B. von der Antenne des Autos empfangen werden und über eine Hochfrequenzleitung und die Schaltungsanordnung geführt werden, zur drahtlosen Übertragung in Richtung des Endgeräts auskoppelt. Der Verzicht auf eine kabelgebundene Verbindung zwischen dem Endgerät und der Schaltungsanordnung und damit der Antenne ermöglicht eine größere räumliche Flexibilität und zusätzlichen Komfort.

Alternativ kann das Endgerät auch über ein Kabel mit der Schaltungsanordnung verbunden werden, welches Störungen, die bei einer Funkverbindung auftreten, vermeidet.

Das Aufteilen des Sendesignals umfasst ein Aufteilen einer Sendeleistung vorzugsweise mithilfe zumindest eines Richtkopplers oder Splitters.

Vorzugsweise weist der erste Signalteil des Sendesignals des Endgeräts eine geringere Leistung als der zweite Signalteil auf. Demnach wird nur ein geringer Anteil der Leistung für die Detektion verwendet und der zweite Signalteil kann ohne größeren Leistungsverlust an die Verstärkungsschaltung und/oder die Antenne weitergeleitet werden. Dies unterstützt somit die während der Durchführung der Frequenzbereichsermittlung andauernde Übertragung und bietet dabei Vorteile in der weiteren Verarbeitung des Hochfrequenzsignals, wie beispielsweise geringere bauteiltechnische Anforderungen an die Verstärker.

Vorzugsweise weisen die für unterschiedliche Frequenzbereiche ausgebildete Signalzweige jeweils zumindest einen Bandpassfilter auf. Die Verwendung der Bandpassfilter ermöglicht ein Filtern des Signals auf den vom Leistungsdetektor auszuwertenden Frequenzbereich des Signals.

Vorzugsweise entspricht der ermittelte Frequenzbereich einem Frequenzbereich eines Funkstandards, insbesondere eines Mobilfunkstandards und/oder eines Standards für lokale Drahtlosnetze. Somit können durch unterschiedliche Signalzweige mit unterschiedlichen Frequenzbereichen unterschiedliche Standards oder Trägerfrequenzen unterstützt werden. Neue Standards können zudem relativ leicht durch Hinzufügen eines weiteren Signalzweiges in der Detektionseinheit sowie einer zugehörigen Verstärkungsschaltung in der Verstärkungseinheit, die für den Frequenzbereich des neuen Standards ausgestaltet sind, ergänzt werden.

Vorzugsweise wird das Ermitteln eines Frequenzbereichs des ersten Signalteils kontinuierlich ausgeführt. Dies ermöglicht schnell auf ein eingehendes Signal zu reagieren, da die Ermittlung ständig ausgeführt wird.

Alternativ wird das Ermitteln eines Frequenzbereichs des ersten Signalteils aufgrund eines Auslöseereignisses gestartet. Dies kann beispielsweise durch ein Auslöseereignis erfolgen, das einem Sendesignal entspricht. Dabei erkennt beispielsweise die Steuereinheit mit Hilfe der Detektionseinheit, die sich in ihrem initialen Zustand befindet, bei der das Signal breitbandig, beispielsweise ohne Bandpassfilter, durchgeleitet wird, eine Schwellwertüberschreitung der Sendeleistung, wodurch die Ermittlung des Frequenzbereichs beginnen kann. Damit wird eine zeitliche Synchronisation der Ermittlung des Frequenzbereichs auf den Start des Sendesignals möglich.

Vorzugsweise beinhalten die für unterschiedliche Frequenzbereiche ausgebildeten Signalzweige der Detektoreinheit jeweils zumindest einen oder einen gemeinsamen Hochfrequenzverstärker zur Dynamikerweiterung der Leistungsmessung. Es kann auch vorgesehen sein, dass einer oder mehrere der Signalzweige jeweils zumindest einen Hochfrequenzverstärker aufweisen, während zwei oder mehr der Signalzweige sich einen gemeinsamen Hochfrequenzverstärker teilen. In jedem Fall ermöglicht eine derartige Ausgestaltung eine zuverlässigere Ermittlung des verwendeten Frequenzbereichs.

Vorzugsweise umfasst das Ermitteln eines Frequenzbereichs des ersten Signalteils ein Vergleichen der Signalleistung von zumindest einem der zeitlich aufeinanderfolgend an den Leistungsdetektor angelegten Signale mit einer Schwellwertleistung. Durch den Schwellwertvergleich kann ermittelt werden, ob ein Signal in dem Frequenzbereich vorhanden ist und demnach die Verstärkungseinheit diesen Frequenzbereich verstärken soll.

Alternativ oder ergänzend umfasst das Ermitteln eines Frequenzbereichs des ersten Signalteils ein Vergleichen der Signalleistung eines ersten der zeitlich aufeinanderfolgend an den Leistungsdetektor angelegten Signale mit zumindest einem zweiten der zeitlich aufeinanderfolgend an den Leistungsdetektor angelegten Signale. Somit ist es der Schaltungsanordnung möglich den Frequenzbereich, der sich aus dem Signalzweig mit der maximalen Signalleistung ergibt, zu ermitteln.

Vorzugsweise werden die an dem Leistungsdetektor zeitlich aufeinanderfolgend angelegten Signale jeweils in eine Gleichspannung umgewandelt. Das oben beschriebene Vergleichen erfolgt dann vorzugsweise mithilfe der umgewandelten Signale und vereinfacht somit die nachfolgende Bearbeitung der Signale.

Vorzugsweise umfasst das Einstellen der Signalführung für den zweiten Signalteil in der Verstärkungseinheit ein Schalten von Signalzweigen, die einen oder mehrere für den ermittelten Frequenzbereich ausgelegte Verstärker aufweisen. Die für verschiedene Frequenzbereiche ausgelegten Verstärker können auf unterschiedlichen Signalzweigen gelegen sein. So kann das Einstellen der Verstärkungseinheit auf den ermittelten Frequenzbereich durch einfaches Umstellen des Signalzweiges erfolgen. Diese Ausgestaltung als verschiedene schaltbare Signalzweige hat zudem den Vorteil, dass die Schaltung leicht neue Signalzweige, die wiederrum neue Frequenzbereiche abdecken, einbinden kann.

Vorzugsweise werden sowohl von dem Endgerät gesendete Signale als auch von der Antenne empfangene Signale mithilfe der Verstärkungseinheit verstärkt.

Die Schaltungsordnung erlaubt somit auch, dass die an der Antenne empfangenen Signale in dem ermittelten Frequenzbereich verstärkt werden. Insbesondere können Übertragungsverfahren nach einem TDD (Time Division Duplex) oder FDD (Frequency Division Duplex) Verfahren unterstützt werden, wobei bei den TDD-Verfahren zu einem Zeitpunkt nur Sende- oder Empfangssignale verstärkt werden, während bei den FDD-Verfahren Sende- und Empfangssignale gleichzeitig verstärkt werden.

Vorzugsweise ist die Verstärkung von zumindest dem zweiten Signalteil mithilfe der Verstärkungseinheit derart ausgelegt, dass eine Dämpfung der Signalübertragung zwischen dem Endgerät und der Antenne kompensiert wird. Die Schaltungsanordnung kann so dem Umstand Rechnung tragen, dass sich das Endgerät nicht im Freien befindet, sondern im Inneren eines Kraftfahrzeugs liegt und an eine externe Antenne gekoppelt ist.

Das erfindungsgemäße Verfahren ist ferner ausgestaltet, nach dem Einstellen der Signalführung für den zweiten Signalteil in der Verstärkungseinheit und bei dem Verstärken von zumindest dem zweiten Signalteil mithilfe der Verstärkungseinheit, ein Empfangen eines weiteren Sendesignals von dem Endgerät, ein Aufteilen des weiteren Sendesignals zumindest in einen ersten weiteren Signalteil und einen zweiten weiteren Signalteil, ein Anlegen des ersten weiteren Signalteils an zumindest einen Signalzweig der Signalzweige der Detektoreinheit, sowie ein Ermitteln eines Frequenzbereichs des ersten weiteren Signalteils durch zeitlich aufeinanderfolgendes Anlegen des zumindest einen Signalzweigs der Detektoreinheit an den Leistungsdetektor zur Auswertung einer Leistung des ersten weiteren Signalteils, zu umfassen. Es können für die Auswertung alle oder nur eine Untermenge der vorhandenen Signalzweige und demnach eine Untermenge von Frequenzbereichen verwendet werden. Dabei kann die Auswahl der zu analysierenden Frequenzbereiche beim Anlegen an die Signalzweige, beim Anlegen an den Leistungsdetektor oder bei beiden erfolgen. Somit können je nach Situation, z.B. je nach aktuell eingerichteter Verstärkung, unterschiedliche Frequenzbereiche für die Detektion herangezogen werden.

Die Detektoreinheit ist demnach in der Lage Handover-Verfahren, wie Inter-band Handover, Inter-frequency Handover oder Inter-RAT-Handover, bei gleichzeitiger optimaler Verstärkung durch die Schaltungsanordnung, durchzuführen. Insbesondere wird die laufende Übertragung nicht durch die kontinuierliche Frequenzbereichsermittlung durch die Detektoreinheit unterbrochen. Zudem ist somit möglich, dass Störsignale, die unter Umständen die Nutzfrequenzzweige der Detektoreinheit überkoppeln, und Inter-Band Carrier Aggregation des Endgeräts (zwei Uplink-Signale in unter-schiedlichen Frequenzbändern) erkannt werden können. Vorzugsweise wird das zeitlich aufeinanderfolgende Anlegen der Signalzweige der Detektoreinheit durch Schalten der Signalzweige der Detektoreinheit an den Leistungsdetektor ausgeführt. Somit wird sichergestellt, dass jeweils nur ein Signalzweig zur Auswertung an dem Leistungsdetektor anliegt.

Weiterhin ist es erfindungsgemäß möglich, Störsignale zu erkennen.

Dies erfolgt dadurch, dass die Detektoreinheit eine Leistung bei einem angelegten Signalzweig mit zumindest einen Bandpassfilter mit einer Leistung bei einem angelegten breitbandigen Signalzweig, vorzugsweise ohne Bandpassfilter, vergleicht. Störsignale können dadurch erkannt werden, dass der Leistungsdetektor bei angelegtem Signalzweig mit Bandpassfilter einen deutlich geringeren Leistungspegel als bei angelegtem Signalzweig ohne Bandpassfilter aufweist. Dadurch wird die Genauigkeit der ausgeführten Ermittlung des Frequenzbereichs verbessert.

Die erfindungsgemäße Schaltungsanordnung zur Verstärkung von Funksignalen zwischen einem Endgerät und einer Antenne weist eine Übertragungseinheit, die eingerichtet ist, ein Sendesignal von dem Endgerät zu empfangen, ein Aufteilungsmittel, das eingerichtet ist, das Sendesignal zumindest in einen ersten Signalteil und einen zweiten Signalteil aufzuteilen, eine Detektoreinheit, die für unterschiedliche Frequenzbereiche ausgebildete Signalzweige einen Leistungsdetektor aufweist, und eingerichtet ist, den ersten Signalteil an die Signalzweige der Detektoreinheit anzulegen und einen Frequenzbereich des ersten Signalteils durch zeitlich aufeinanderfolgendes Anlegen der Signalzweige der Detektoreinheit an den Leistungsdetektor zur Auswertung einer Leistung des ersten Signalteils zu ermitteln, eine Steuereinheit, die eingerichtet ist, um die Signalführung für den zweiten Signalteil in der Verstärkungseinheit basierend auf dem durch die Detektoreinheit ermittelten Frequenzbereich einzustellen und eine Verstärkungseinheit, die eingerichtet ist, um zumindest den zweiten Signalteil zu verstärken, auf.

Die erfindungsgemäße Schaltungsanordnung ermöglicht die bereits bezüglich des Verfahrens erläuterten Vorteile zu erreichen.

### Zeichnungen

Weitere Beispiele und Ausführungsformen werden im Folgenden anhand der Zeichnung beschrieben, bei der:
- Fig. 1: ein Blockdiagram eines Systems einer Schaltungsanordnung zur Verstärkung von Funksignalen zwischen einem Endgerät und einer Antenne gemäß einer Ausführungsform der Erfindung darstellt,
- Fig. 2: eine detaillierte Schaltungsanordnung zur Verstärkung von Funksignalen zwischen einem Endgerät und einer Antenne gemäß einer Ausführungsform der Erfindung zeigt,
- Fig. 3: ein Ablaufdiagramm eines Verfahrens zur Verstärkung von Funksignalen zwischen einem Endgerät und einer Antenne gemäß einer Ausführungsform der Erfindung zeigt,
- Fig. 4a bis 4c: die detaillierte Schaltungsanordnung gemäß Fig. 2 bei einer Frequenzbereichsermittlung sowie bei einer Verstärkung in einem ermittelten Frequenzbereich zeigen,
- Fig. 5a: die detaillierte Schaltungsanordnung gemäß Fig. 2 bei einer Verstärkung bei Abwesenheit eines Sendesignals gemäß einer Ausführungsform der Erfindung zeigt, und
- Fig. 5b: die detaillierte Schaltungsanordnung gemäß Fig. 2 bei einer Verstärkung bei Abwesenheit eines Sendesignals gemäß einer anderen Ausführungsform der Erfindung zeigt.

### Detaillierte Beschreibung

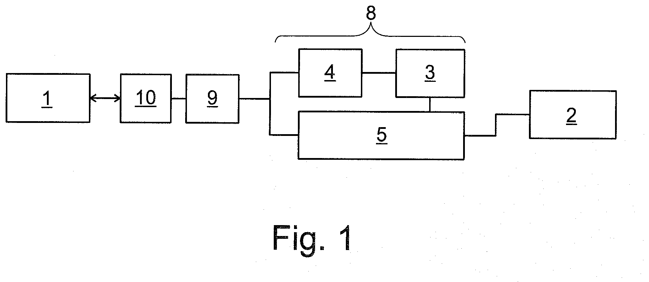

**Fig. 1** zeigt ein Blockdiagram eines Systems, welches eine Schaltungsanordnung zur Verstärkung von Funksignalen zwischen einem Endgerät und einer Antenne gemäß einer Ausführungsform der Erfindung zeigt.

Die in Fig. 1 gezeigte Schaltungsanordnung 8 verbindet ein Endgerät 1 mit einer Antenne 2. Das Endgerät 1 ist vorzugsweise eine elektronische Vorrichtung, die in der Lage ist Drahtloskommunikationen durchzuführen, wie beispielsweise ein Mobiltelefon, ein Smartphone, ein Modem oder ein Funkmodul. Die Antenne 2 ist beispielsweise eine an einem Kraftfahrzeug extern angebrachte Antenne oder ein Antennenanschluss. Das Endgerät 1 und die Antenne 2 sind selbst nicht Teil der Schaltungsanordnung.

Die Schaltungsanordnung 8 dient der Verstärkung der von dem Endgerät 1 gesendeten Signale, auch Sendesignale genannt, und/oder der von der Antenne 2 empfangenen Signale, auch Empfangssignale genannt. Die Verstärkung der Schaltungsanordnung 8 kann dabei so ausgelegt sein, dass sie die Dämpfung der Signalleistung zwischen der Antenne 2 und dem Endgerät 1 kompensiert.

Die Schaltungsordnung 8 umfasst vorzugsweise eine Detektoreinheit 4, eine Verstärkungseinheit 5 sowie eine Steuereinheit 3. Die Detektoreinheit 4 dient der Ermittlung des zu verstärkenden Frequenzbereichs. Die Steuereinheit 3 ermöglicht die Konfiguration ggf. Einstellung der Verstärkungsschaltung basierend auf dem von der Detektoreinheit 4 ermittelten Frequenzbereich und die Verstärkungseinheit 5 verstärkt Signale in dem ermittelten Frequenzband, z.B. bei den FDD-Verfahren Sende- und Empfangssignale gleichzeitig.

Die Schaltungsanordnung 8 nimmt vorzugsweise mit Hilfe einer Übertragungseinheit 10 die Sendesignale des Endgeräts zur leitungsbasierten Weiterverarbeitung mit Hilfe der Schaltungsanordnung auf und überträgt die Empfangssignale der Antenne 2 nach der Weiterverarbeitung durch die Schaltungsanordnung an das Endgerät 1. Die Übertragungseinheit 10 bildet nicht notwendigerweise Teil der Schaltungsanordnung.

In Sendesignalrichtung schließt sich an die Übertragungseinheit 10 eine Kopplungseinheit 9 an, die dazu dient, das Sendesignal des Endgeräts in (zumindest) einen ersten Signalteil und einen zweiten Signalteil aufzuteilen und den ersten Signalteil der Detektoreinheit 4 und den zweiten Signalteil der Verstärkungseinheit 5 zuzuführen. Die Schaltungsanordnung 8 kann weiterhin derart ausgestaltet sein, dass auch Empfangssignale der Antenne 2 über die Kopplungseinheit 9 geführt werden.

Die Verstärkungseinheit 5 ist vorzugsweise dazu ausgelegt, sowohl Empfangs- als auch Sendesignale zu verstärken. Die Detektion des Frequenzbereichs erfolgt jedoch in der bevorzugten Ausführungsform mit Hilfe der Sendesignale.

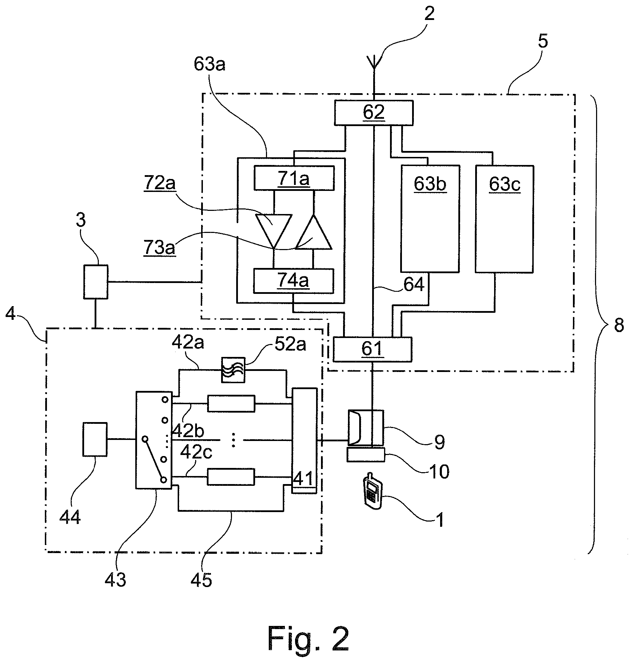

**Fig. 2** zeigt eine detaillierte Schaltungsanordnung zur Verstärkung von Funksignalen zwischen einem Endgerät und einer Antenne gemäß einer Ausführungsform der Erfindung.

Die detaillierte Darstellung der Schaltungsanordnung 8 weist eine Detektoreinheit 4, eine Verstärkungseinheit 5, eine Übertragungseinheit 10, eine Kopplungseinheit 9 sowie eine Steuereinheit 3 auf. Die Steuereinheit 3 ist als eigene Einheit gezeigt, sie kann jedoch auch mit der Detektoreinheit 4 eine Steuer- und Detektoreinheit bilden.

Wie bereits oben erwähnt, bildet die Übertragungseinheit 10 die Schnittstelle zu dem Endgerät und die Kopplungseinheit 9 dient dazu, ein Sendesignal des Endgeräts in einen ersten Signalteil und einen zweiten Signalteil aufzuteilen und den ersten Signalteil der Detektoreinheit 4 und den zweiten Signalteil der Verstärkungseinheit 5 zuzuführen.

Die in Fig. 2 dargestellte Ausführungsform zeigt ein Aufteilen des empfangenen Sendesignals in einen ersten Signalteil einen zweiten Signalteil durch einen Koppler.

Das von dem Endgerät empfangene Sendesignal kann an der Übertragungseinheit 10 entweder über eine Funkschnittstelle oder ein Kabel empfangen werden. Der Verzicht auf eine kabelgebundene Verbindung zwischen dem Endgerät und der Schaltungsanordnung und damit der Antenne ermöglicht, eine Vielzahl von Endgeräten ohne eine einheitliche Kabelschnittstelle zu unterstützten, wie auch eine größere räumliche Flexibilität und zusätzlichen Komfort. Demnach muss der Benutzer das Endgerät beim Einsteigen in das Kraftfahrzeug nicht erst mithilfe eines Kabels mit der externen Antenne verbinden, sondern kann aufgrund der drahtlosen Technologie diese ohne weiteres Zutun verwenden. Ein Kabel hat wiederrum den Vorteil, dass Störungen, die auf der Funkschnittstelle auftreten können, vermieden werden.

Die Kopplungseinheit 9 umfasst beispielsweise einen Richtkoppler oder Splitter. Auch können mehr als ein Koppler verwendet werden, um Signalteile auszukoppeln, die anschließend verschiedenen Signalzweigen zur Ermittlung eines Frequenzbereichs in der Detektoreinheit zugeführt werden können. Die in Fig. 2 gezeigte Ausführungsform beinhaltet lediglich einen Koppler.

Die Kopplungseinheit 9 ermöglicht eine Auskopplung, wobei der erste Signalteil des Sendesignals des Endgeräts vorzugsweise eine geringere Leistung aufweist als der zweite Signalteil. Demnach wird nur ein geringer Anteil der Leistung für die Detektion verwendet und der zweite Signalteil kann ohne größeren Leistungsverlust an die Verstärkungsschaltung und/oder die Antenne weitergeleitet werden. Dies unterstützt somit die andauernde Übertragung, während der Durchführung der Frequenzbereichsermittlung.

Wie bereits oben erwähnt, wird der erste Signalteil an die Detektoreinheit 4 geleitet. Diese umfasst beispielsweise eine erste Signalaufteilungseinheit 41 (wie einen Schalter, Leistungsteiler oder Frequenzweiche), die den ersten Signalteil auf verschiedene Signalzweige 42a bis 42c und ggf. Signalzweig 45 leitet. Die Signalzweige 42a bis 42c sind jeweils für unterschiedliche Frequenzbereiche und/oder unterschiedliche Übertragungsverfahren ausgestaltet. Der Signalzweig 45 kann, wenn vorhanden, breitbandig ausgestaltet sein.

Die unterschiedlichen Frequenzbereiche entsprechen beispielsweise den Frequenzbereichen unterschiedlicher Funkstandards. Solche Funkstandards können insbesondere Mobilfunkstandards und/oder Standards für lokale Drahtlosnetze sein. Auch können unterschiedliche Frequenzbereiche unterschiedliche Trägerfrequenzen eines selben Standards abdecken.

In der vorliegenden Ausführungsform sind drei unterschiedliche Signalzweige 42a bis 42c gezeigt. Es können jedoch weniger oder mehr als drei Signalzweige verwendet werden, je nachdem wie viele unterschiedliche Frequenzbereiche die Schaltungsanordnung unterstützen soll. Neue Frequenzbereiche, wie sie ggf. bei der Einführung neuer Funkstandards auftreten, können leicht durch Hinzufügen eines weiteren Signalzweiges in der Detektionseinheit ergänzt werden.

Dies setzt aber zusätzlich auch ein Hinzufügen von entsprechenden Verstärkungsschaltung in der Verstärkungseinheit voraus, wie später im Detail erläutert werden wird.

Die Anzahl der Signalzweige 42a bis 42c ist unabhängig von der Anzahl der zu verstärkenden Frequenzbereiche. Beispielsweise kann die Anzahl der zu detektierenden Frequenzbereiche die der zu verstärkenden Frequenzbereiche übersteigen.

Ein für einen Frequenzbereich ausgebildeter Signalzweig, wie beispielsweise Signalzweig 42a, kann den Signalteil in dem Frequenzbereich, für welchen er ausgelegt ist, wie beispielsweise 900 oder 1.800 MHz, herausfiltern. Dies kann mithilfe eines Bandpassfilters 52a erfolgen.

Die Signalzweige 42a bis 42c sind vorzugsweise über eine zweite Signalaufteilungseinheit 43, insbesondere einen Schalter, mit einem Leistungsdetektor 44 verbunden. Wird für die Zuführung des ersten Signalteils als erste Signalaufteilungseinheit 41 bereits ein Schalter verwendet, kann die Verbindung der Signalzweige 42a bis 42c mit dem Leistungsdetektor 44 auch über eine zweite Signalaufteilungseinheit 43 erfolgen, die z.B. als Frequenzweiche ausgestaltet ist. Entscheidend ist, dass die Schaltungsanordnung Mittel vorsieht, die Signalzweige 42a bis 42c zu schalten. Die zweite Signalaufteilungseinheit 43 (bzw. die erste Signalaufteilungseinheit (Schalter) 41 in Kombination mit der zweiten Signalaufteilungseinheit (Frequenzweiche) 43) legt zeitlich aufeinanderfolgend die verschiedenen Signalzweige 42a bis 42c an den Leistungsdetektor an. Das zeitlich aufeinanderfolgende Anlegen kann periodisch erfolgen oder durch ein Ereignis gesteuert werden. Somit wird jeweils nur der Signalteil eines Signalzweiges an den Leistungsdetektor 44 geführt. Die anderen Signalzweige sind in dem Moment nicht mit dem Leistungsdetektor 44 verbunden. Dieses Durchrotieren der verschiedenen Signalzweige ermöglicht es nur einen Leistungsdetektor für eine Vielzahl von Signalzweigen zu verwenden. Somit kann der schaltungstechnische Aufwand reduziert und Komponenten eingespart werden.

Falls beim Anlegen des ersten Signalteils an die unterschiedlichen Signalzweige als erste Signalaufteilungseinheit 41 ein Schalter und nicht etwa ein Frequenzteiler verwendet wurde, muss sichergestellt werden, dass dieser synchron mit dem Schalter, der bei der zweiten Signalaufteilungseinheit 43 zum Einsatz kommt (nachfolgend auch kurz: Schalter 43), geschaltet wird. Dies ist erforderlich, um einen geschlossenen Signalpfad zwischen der Kopplungseinheit 9 bzw. dem Empfänger des von dem Endgerät gesendeten Signals und dem Leistungsdetektor 44 zu gewährleisten.

Das Ermitteln eines Frequenzbereichs des ersten Signalteils kann kontinuierlich ausgeführt oder durch ein Auslöseereignis gestartet werden. Demnach kann der Schalter 43 entweder ständig die einzelnen Signalzweige durchschalten oder erst mit dem Eingang eines Auslöseereignisses mit dem Schalten beginnen.

Ein kontinuierliches Durchschalten der einzelnen Signalzweige hat den Vorteil, dass schnell auf ein eingehendes Signal reagiert werden kann, ohne dass auf ein entsprechendes Auslöseereignis gewartet werden muss. Die Verwendung eines Auslöseereignisses hat jedoch wiederum den Vorteil, dass eine zeitliche Synchronisation der Ermittlung des Frequenzbereichs auf den Start des Sendesignals möglich wird.

Ein solches Auslöseereignis kann dadurch realisiert werden, dass durch einen Leistungsdetektor ermittelt wird, ob ein Sendesignal von einem Endgerät empfangen wurde. Dies kann dadurch erfolgen, dass während eines Betriebes, indem kein Sendesignal empfangen wird, der Schalter 43 auf einen Sendezweig 45 geschaltet ist, der nicht für einen bestimmten Frequenzbereich ausgelegt ist, sondern zumindest so breitbandig dimensioniert ist, dass alle unterstützten Sendefrequenzbereiche an den Leistungsdetektor 44 durchleitet werden. Hierfür kann der Sendezweig 45, im Gegensatz zu den für jeweils einen spezifischen Frequenzbereich ausgebildeten Signalzweigen 42a bis 42c, keinen Bandpassfilter aufweisen, oder einen Bandpassfilter, der ausgelegt ist, Frequenzen aller auszuwertenden Frequenzbereiche (Nutzbänder) durchzulassen.

Der Leistungsdetektor 44 kann dann in einem nächsten Schritt das von den unterschiedlichen Signalzweigen empfangene Signal in ein Gleichspannungssignal umwandeln, welches eine einfache Auswertung sowie einen leichten Vergleich mit anderen Werten, wie beispielsweise einem Schwellwert ermöglicht.

Der Leistungsdetektor 44 gibt das umgewandelte Signal an die Steuereinheit 3 weiter, welche das Signal dann analysieren kann. Die Steuereinheit 3 kann anschließend anhand dieses Signals den entsprechenden Frequenzbereich oder falls das Signal über den Signalweg 45 geleitet wurde, das Vorhandensein eines Signals, ermitteln.

Dies kann entweder über den Vergleich des an der Steuereinheit 3 eingegangen Signals mit einem Schwellwert und/oder mit vorher erfassten Werten erfolgen. Der Vergleich mit vorher erfassten Werten setzt ein Speichern dieser Werte voraus. Beispielsweise können die jeweils letzten erfassten Werte jedes Signalzweiges gespeichert werden. Durch den Vergleich mit vorher erfassten Werten kann der Frequenzbereich, der die höchste Signalleistung beinhaltet ermittelt und verstärkt werden. Dies ist besonders dann vorteilhaft, wenn auch Signalleistung in Frequenzbereichen vorhanden ist, die nicht der Trägerfrequenz des übertragenen Sendesignals entspricht, sondern aus Rauschen, Interferenzen oder Ähnlichem resultiert. Vorzugsweise erfolgt die Erkennung derartiger Störsignale dadurch, dass eine Leistung bei einem angelegten Signalzweig mit zumindest einen Bandpassfilter mit einer Leistung bei einem angelegten breitbandigen Signalzweig verglichen wird. Störsignale können dadurch erkannt werden, dass der Leistungsdetektor bei angelegtem Signalzweig mit Bandpassfilter einen deutlich geringeren Leistungspegel als bei angelegtem Signalzweig ohne Bandpassfilter aufweist.

In verschiedenen Ausführungsformen können auch mehrere Frequenzbereiche verstärkt werden, wenn die Signale der entsprechenden Signalzweige alle über einem vorbestimmten Schwellwert liegen.

Zusätzlich zur Ermittlung des Frequenzbereichs kann die Detektoreinheit zusammen mit der Steuereinheit ausgestaltet sein, den absoluten Signalleistungspegel zu messen sowie den Signalzeitverlauf (kontinuierlich oder zeitdiskret) zu analysieren. Beispielsweise kann hierfür z.B. mit Hilfe eines Komparators in der Steuereinheit 3 bestimmt werden, ob Sendesignale oberhalb eines Schwellwerts vorhanden sind, und falls ja, kann die Zeit bestimmt werden (z.B. Mikrokontroller-Takte), in der das Sendesignal vorhanden ist. Hieraus kann die Dauer und auch die Periode von zeitdiskreten Signalen (TDD) ermittelt werden.
Der Zeitverlauf kann ebenso wie der Frequenzbereich zur Ermittlung des Funkstandards verwendet werden. Die Leistungsmessung hingegen kann der Verstärkungseinstellung und Sendeleistungsregelung dienen.

Auf der Grundlage des ermittelten Frequenzbereichs oder der ermittelten Frequenzbereiche kann eine Signalführung eingestellt werden, die es ermöglicht, den zweiten Signalteil mithilfe der Verstärkungseinheit zu verstärken. Auch kann beim Einstellen der Signalführung der von der Detektoreinheit ermittelte Zeitverlauf des Sendesignals berücksichtigt werden. Dieses Einstellen der Signalführung kann beispielsweise durch die Steuereinheit 3 durchgeführt werden. Hat die Steuereinheit 3 beispielsweise ermittelt, dass der Frequenzbereich, der dem Signalzweig 42a entspricht, verwendet wird und demnach verstärkt werden soll, kann sie eine zugehörige Verstärkungsschaltung, wie beispielsweise die Verstärkungsschaltung 63a schalten. Dieses Schalten kann mithilfe einer Signalaufteilungseinheit 61 für die von dem Endgerät an die Antenne übertragenen Signale und einer weiteren Signalaufteilungseinheit 62 für die von dem Endgerät an die Antenne übertragenen Signale erfolgen. Die Signalaufteilungseinheiten 61 und 62 umfassen jeweils beispielsweise einen oder mehrere Schalter, Koppler und/oder Frequenzweichen. Eine Verstärkungsschaltung, wie beispielsweise die Verstärkungsschaltung 63a, kann weitere Signalaufteilungseinheiten 71a und 74a, jeweils beispielsweise aufweisend einen oder mehrere Schalter, Koppler bzw. Frequenzweichen, zum Aufteilen von Sendesignalen und Empfangssignalen enthalten. Die Aufteilung in Sendesignale und Empfangssignale kann jedoch auch übergeordnet für alle oder einige Verstärkungsschaltungen stattfinden. Das bedeutet, dass das Signal bereits in Sendesignale und Empfangssignale aufgeteilt wird, bevor es zu der entsprechenden Verstärkungsschaltung geleitet wird. Die Verstärkungsschaltung 63a kann weiterhin einen Sendeverstärker 73a und einen Empfangsverstärker 72a beinhalten, die für den spezifischen Frequenzbereich der Verstärkungsschaltung ausgelegt sind. Demnach werden sowohl Sendesignale als auch Empfangssignale in dem ermittelten Frequenzbereich verstärkt. Die genaue Ausgestaltung der Verstärkungsschaltung kann je nach verwendetem Standard und/oder Übertragungsverfahren, wie beispielsweise des Duplexverfahrens, z.B. Frequenzduplex (FDD) oder Zeitduplex (TDD), abweichen. Beispielsweise können auch die Sendeverstärker 73a und Empfangsverstärker 72a über Steuerleitungen von der Steuereinheit 3 (nicht gezeigt in Fig. 2) gesteuert werden, z.B. ein- oder ausgeschaltet oder konfiguriert werden.

Die modulare Ausgestaltung der Verstärkungsschaltungen, die durch die Steuereinheit 3 entsprechend angesteuert werden können, ermöglicht ohne großen Aufwand weitere Verstärkungsschaltungen für zusätzliche Frequenzbereiche oder Mobilfunkstandards zu ergänzen.

Ferner kann die Steuereinheit 3 die Verstärkung des Sendeverstärkers 73a und/oder des Empfangsverstärkers 72a, entsprechend der von der Detektoreinheit durchgeführten Leistungsmessung steuern.

In dem Fall, in dem kein Sendesignal von dem Endgerät an die Antenne übermittelt und demnach kein Frequenzbereich ermittelt wird, können Empfangssignale und/oder Sendesignale von der Antenne zu dem Endgerät in einer Ausführungsform über den Signalzweig 64 geleitet werden, der keine Verstärkung durchführt. In einer anderen Ausführungsform können in dem Fall, in dem kein Sendesignal von dem Endgerät an die Antenne übermittelt wird, alle Empfangsverstärkungsschaltungen aktiv sein, so dass jeder unterstützte Empfangsfrequenzbereich verstärkt an das Endgerät übermittelt wird.

Die Verstärkung von zumindest dem zweiten Signalteil mithilfe der Verstärkungseinheit kann derart ausgelegt sein, dass eine Dämpfung der Signalübertragung zwischen dem Endgerät und der Antenne kompensiert wird. Demnach ermöglicht die Schaltungsanordnung dem Umstand Rechnung zu tragen, dass sich das Endgerät nicht im Freien befindet, sondern im Inneren eines Kraftfahrzeugs an eine externe Antenne gekoppelt ist. Alternativ kann die Verstärkungseinheit auch über die Kompensation hinaus das Signal verstärken und dadurch eine Erweiterung der Reichweite durch Signalverstärkung bewirken.

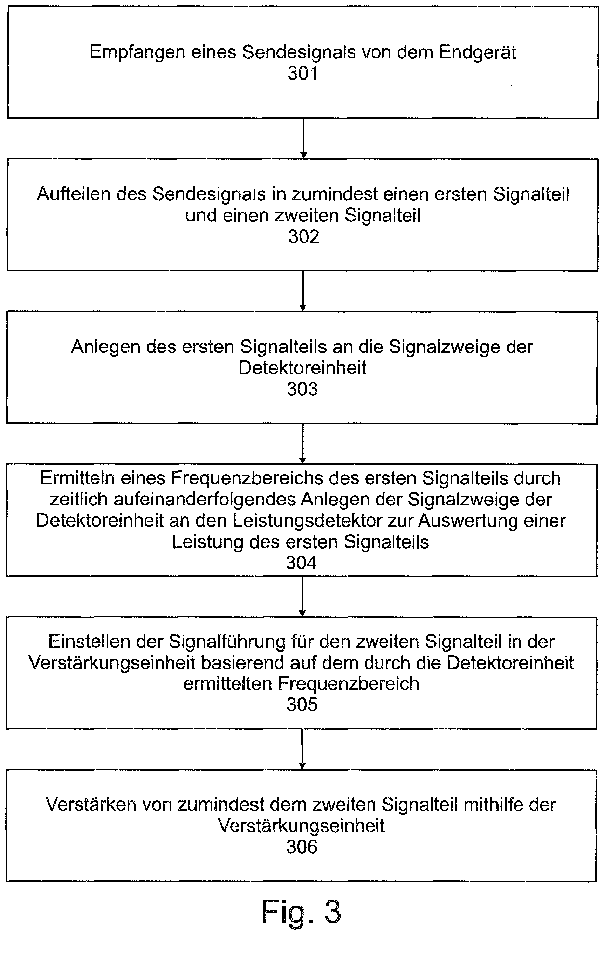

**Fig. 3** zeigt ein Ablaufdiagramm eines Verfahrens zur Verstärkung von Funksignalen zwischen einem Endgerät und einer Antenne gemäß einer Ausführungsform der Erfindung.

Bei Schritt 301 wird ein Sendesignal von dem Endgerät 1 an der Schaltungsanordnung 8 empfangen. Dies erfolgt beispielsweise über ein Kabel oder eine Funkschnittstelle. Darauf folgt bei Schritt 302 ein Aufteilen des Sendesignals in einen ersten Signalteil und einen zweiten Signalteil. Die Aufteilung kann durch einen Richtkoppler, einen Splitter oder eines sonstigen Bauteils, das Hochfrequenzsignale in der Leistung aufteilen kann erfolgen.

Der erste Signalteil wird anschließend bei Schritt 303 an Signalzweige der Detektoreinheit, die für unterschiedliche Frequenzbereiche ausgebildet sind, angelegt. Das Anlegen des ersten Signalteils auf die verschiedenen Signalzweige kann mithilfe einer ersten Signalaufteilungseinheit 41, beispielsweise mithilfe eines Schalters (z.B. in Kombination mit der zweiten Signalaufteilungseinheit 43, beispielsweise einer Frequenzweiche oder einem Leistungsteiler), oder mithilfe einer ersten Signalaufteilungseinheit 41, die als Frequenzweiche oder Leistungsteiler ausgestaltet ist (z.B. in Kombination mit der zweiten Signalaufteilungseinheit 43, die als Schalter ausgestaltet ist), erfolgen. Bei Schritt 304 wird ein Frequenzbereich des ersten Signalteils durch zeitlich aufeinanderfolgendes Anlegen der Signalzweige der Detektoreinheit an den Leistungsdetektor ermittelt. Das zeitlich aufeinanderfolgende Anlegen kann mithilfe der zweiten Signalaufteilungseinheit 43, insbesondere eines Schalters, erfolgen. Falls das Anlegen des ersten Signalteils auf verschiedene Signalzweige mit Hilfe einer als Schalter ausgebildeten Signalaufteilungseinheit 41 erfolgte, muss die als Schalter ausgebildete zweiten Signalaufteilungseinheit 43, wie bereits mit Bezug zu Fig. 2 erwähnt, synchron mit dem Schalter 43 geschaltet werden. Die Ermittlung des Frequenzbereichs kann, wie oben detailliert erläutert, mithilfe von Vergleichen mit Schwellwerten oder vorher aufgenommenen Leistungen erfolgen.

Ist der Frequenzbereich ermittelt, wird die Signalführung für den zweiten Signalteil in der Verstärkungseinheit basierend auf dem ermittelten Frequenzbereich bei Schritt 305 eingestellt. Dies erfolgt beispielsweise durch Schalten von Signalzweigen, die Verstärker für den ermittelten Frequenzbereich aufweisen. Abschließend wird bei Schritt 306 zumindest das zweite Signalteil mithilfe der auf den Frequenzbereich eingestellten Verstärkungseinheit verstärkt. Vollständigkeitshalber soll angemerkt werden, dass die Frequenzbereiche der Signalzweige der Detektoreinheit 42a bis 42c, nicht mit den durch die Verstärkungseinheit unterstützten Frequenzbereichen übereinstimmen müssen. Beispielsweise kann es vorteilhaft sein, eine größere Anzahl an Signalzweigen unterschiedlicher Frequenzbereiche in der Detektoreinheit 4 anzubringen. Damit kann beispielsweise eine präzise Bestimmung von Nutz- und Störsignalen sichergestellt werden. Die Frequenzbereiche der Signalzweige der Detektoreinheit 42a bis 42c können sich auch überlappen.

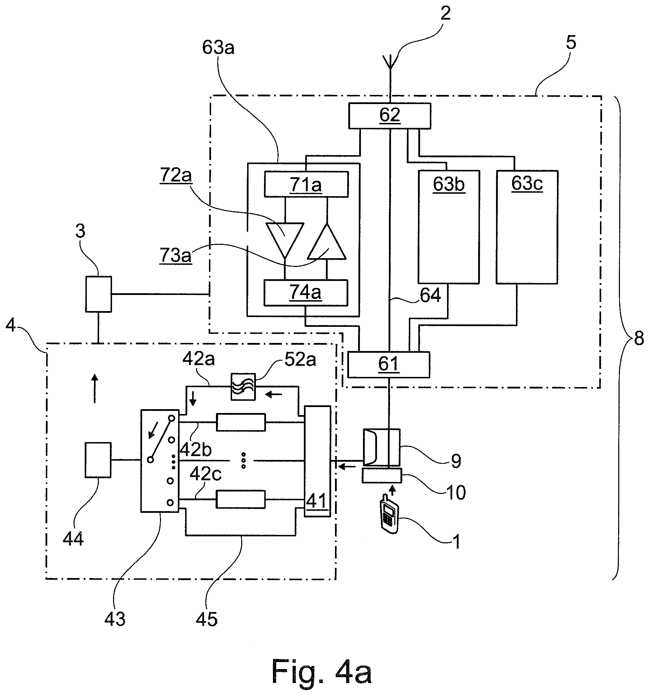

Figuren 4a bis 4c zeigen die detaillierte Schaltungsanordnung gemäß Fig. 2 bei einer Frequenzbereichsermittlung sowie bei einer Verstärkung in einem ermittelten Frequenzbereich.

In **Fig. 4a** findet die Ermittlung des Frequenzbereichs durch die Detektoreinheit 4 statt. Während die Ermittlung des Frequenzbereichs durch die Detektoreinheit 4 stattfindet, kann die Verstärkereinheit unverändert bleiben. Liegt beispielsweise kein vorher detektiertes Band an, sind vorzugsweise die Empfangsverstärker aktiv und bleiben während der Dauer der Ermittlung aktiv. Nach erfolgreicher Ermittlung wird, wie in der Abbildung gezeigt, der Signalzweig 42a durchlaufen, welcher in diesem Fall von der Steuereinheit 3 als verwendeter Frequenzbereich detektiert wird.

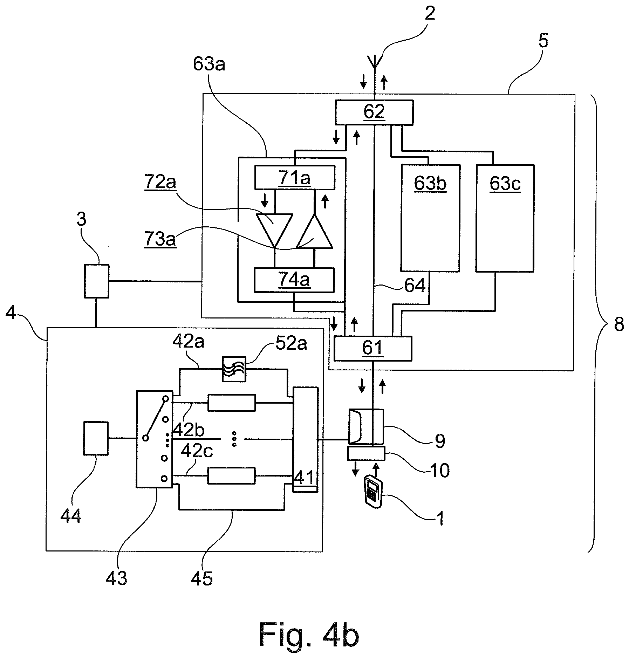

In **Fig. 4b** wird dann mithilfe der Steuereinheit 3 die zu dem Signalzweig 42a zugehörige Verstärkungsschaltung 63a angelegt. Eingehende Sende- und Empfangssignale werden nun anhand der Verstärkungsschaltung 63a verstärkt (wie es bei einem FDD-basierten Übertragungsverfahren auftritt).

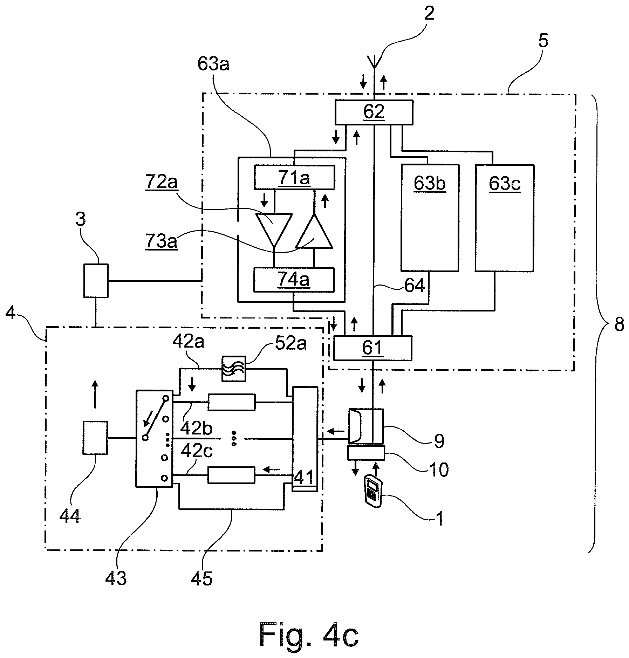

Wie in **Fig. 4c** gezeigt, kann die zweite Signalaufteilungseinheit 43 (Schalter), bei einer laufenden Übertragung und Verstärkung mithilfe der Verstärkungsschaltung 63a, die unterschiedlichen Signalzweige 42a bis 42c zeitlich aufeinanderfolgend an den Leistungsdetektor 44 anlegen. In der Abbildung ist beispielsweise gerade der Signalzweig 42c an den Leistungsdetektor 44 angelegt. Eine laufende Übertragung hindert demnach eine gleichzeitige Ermittlung eines neuen Frequenzbereichs nicht. Dies ist besonders in den Fällen relevant, in denen sich aufgrund eines Inter-band Handovers der verwendete Frequenzbereich bei einer laufenden Übertragung ändert oder Störsignale an den Detektor gelangen. Zudem kann dies bei einer Inter-Band Carrier Aggregation des Endgeräts (zwei Uplink-Signale in unterschiedlichen Frequenzbändern) hilfreich sein.

Es ist nicht erforderlich, dass für die gleichzeitig während der Verstärkung durchgeführte Detektion alle Signalzweige 42a bis 42c an den Leistungsdetektor angelegt werden. Vielmehr kann es vorteilhaft sein nur eine Untermenge unterschiedlicher Signalzweige bei der Detektion zu berücksichtigen. Beispielsweise kann diese Untermenge auf zu dem aktuell verstärkten Frequenzbereich benachbarte Frequenzbereiche oder anderweitig mit diesem in Verbindung stehende Frequenzbereiche beschränkt sein.

Die Erkennung von Störsignalen erfolgt dadurch, dass die von dem Leistungsdetektor 44 erkannten Leistungen bei angelegten Signalzweigen 42a bis 42c mit der erkannten Leistung bei angelegtem Signalzweig 45 verglichen werden. Nutzsignale können dadurch erkannt werden, dass die erkannten Leistungspegel in etwa gleich groß sind oder eine in Abhängigkeit der realisierten Schaltung bekannte Leistungsdifferenz aufweisen. Störsignale können dadurch erkannt werden, dass der Leistungsdetektor bei angelegten Signalzweigen 42a bis 42c deutlich geringere Leistungspegel als bei angelegtem Signalzweig 45 erkennt, was auf die Filterwirkung der in den Signalzweigen 42a bis 42c verwendeten Bandpässe zurückzuführen ist. Somit kann es beispielsweise genügen, den maximalen Leistungspegel aus den bei angelegten Signalzweigen 42a bis 42c erkannten Leistungspegeln zu bestimmen, und diesen mit dem Leistungspegel bei angelegtem Signalzweig 45 zu vergleichen. Ist dieser maximale Leistungspegel in etwa gleich groß wie der Leistungspegel bei angelegtem Signalzweig 45, oder weichen beide nur durch eine in Abhängigkeit der realisierten Schaltung bekannte Leistungsdifferenz ab, kann die Schaltungsanordnung das erkannte Signal als Nutzsignal verarbeiten. Ist hingegen dieser maximale Leistungspegel deutlich geringer als der Leistungspegel bei angelegtem Signalzweig 45, oder weichen beide um mehr als eine in Abhängigkeit der realisierten Schaltung bekannte Leistungsdifferenz ab, kann die Schaltungsanordnung das erkannte Signal als Störsignal bestimmen. Alternativ ist es auch denkbar, alle Leistungspegel bei angelegten Signalzweigen 42a bis 42c mit dem Leistungspegel bei angelegtem Signalzweig 45 zu vergleichen, um die Erkennung von Stör- bzw. Nutzsignalen vorzunehmen.

Wurde ein Nutzsignal in einem Signalzweig erkannt, der keinen direkten Bezug zu dem Frequenzbereich hat, der aktuell verstärkt wird, kann die Steuereinheit 3 eingerichtet sein, die Verstärkungseinheit 5 auf den neuen Frequenzbereich einzustellen. Die Steuereinheit 3 kann jedoch zusätzlich weitere Parameter, wie z.B. die Dauer oder die Stärke des Nutzsignals, für die Beurteilung, ob eine Umschaltung durchgeführt werden soll, heranziehen. Ferner kann die Steuereinheit 3 Auswertungen anderer Frequenzbereiche berücksichtigen. Beispielsweise kann die Steuereinheit 3 ermitteln, ob weiterhin ein Nutzsignal auf dem Frequenzbereich, auf den die Verstärkungseinheit 5 aktuell eingestellt ist, vorliegt. Ist dies der Fall, kann beispielsweise eine Inter-Band Carrier Aggregation des Endgeräts vorliegen und die Steuereinheit 3 kann diese erkennen. Falls die Verstärkungseinheit 5 so eingerichtet ist, dass sie mehrere Frequenzbereiche gleichzeitig verstärken kann, beispielsweise durch Aktivierung verschiedener, mit Bandpassfilter ausgestatteter Verstärkungssignalzweige, kann die Steuereinheit 3 die Verstärkungseinheit 5 so konfigurieren, dass mehrere detektierte Frequenzbereiche verstärkt werden.

Falls hingegen die Verstärkungseinheit 5 so eingerichtet ist, dass sie jeweils nur einen Frequenzbereich gleichzeitig verstärken kann, muss die Steuereinheit 3 sich für einen zu verstärkenden Frequenzbereich entscheiden. Dies kann gemäß unterschiedlicher Kriterien erfolgen. Zum Beispiel kann ein Hauptfrequenzbereich weiterhin zur Verstärkung ausgewählt werden. Im Beispiel von 5G (Mobilfunkstandard der fünften Generation), bei welchem zusätzlich zu der 5G-Kommunikation gleichzeitig auch eine 4G-Verbingung besteht, kann die 4G-Verbindung priorisiert und verstärkt werden, da diese für die Verbindung zur Basisstation erforderlich sein kann.

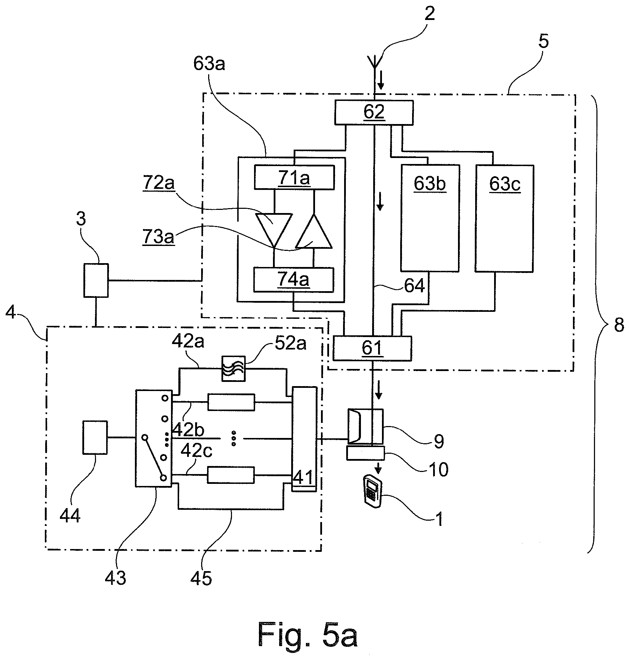

**Fig. 5a** zeigt die detaillierte Schaltungsanordnung gemäß Fig. 2 bei einer Verstärkung bei Abwesenheit eines Sendesignals gemäß einer Ausführungsform der Erfindung.

Gemäß dieser Ausführungsform wird vorzugsweise bei Abwesenheit eines Sendesignals und demnach bei Abwesenheit eines ermittelten Frequenzbereichs, keine Verstärkung des Empfangssignals durchgeführt. Das Empfangssignal kann in dem Fall über den Signalzweig 64 ohne Verstärkung an das Endgerät 1 übermittelt werden.

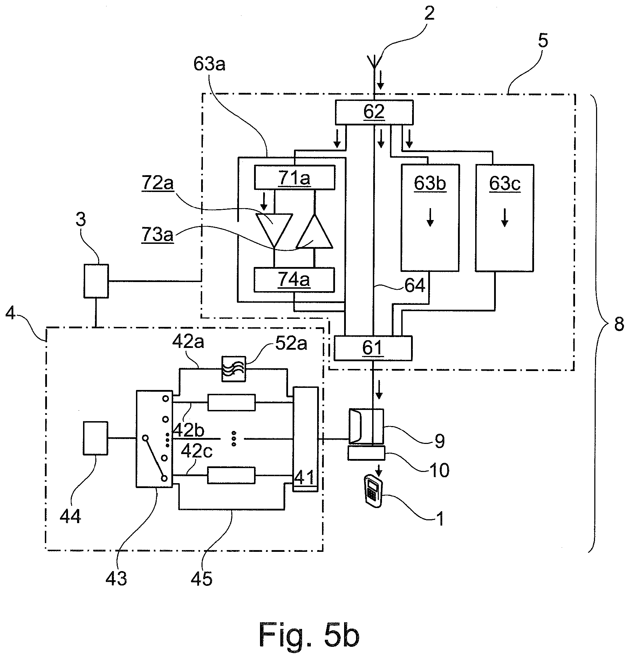

**Fig. 5b** zeigt die detaillierte Schaltungsanordnung gemäß Fig. 2 bei einer Verstärkung bei Abwesenheit eines Sendesignals gemäß einer anderen Ausführungsform der Erfindung. Bei dieser Ausführungsform können alle oder zumindest mehrere Empfangsverstärker aktiv sein, wenn kein bestimmter Frequenzbereich anhand eines Sendesignals ermittelt wurde. Demnach kann das Empfangssignal in allen oder mehreren Frequenzbereichen, in denen eine Verstärkungsschaltung vorhanden ist, verstärkt werden.

### Bezugszeichenübersicht

1 Endgerät/Mobiltelefon
2 Antenne
3 Steuereinheit
4 Detektoreinheit
41 Erste Signalaufteilungseinheit (z.B. Frequenzweiche, Leistungsteiler und/ oder Schalter)
42a bis 42c Signalzweige für Frequenzbereiche a bis c
43 Zweite Signalaufteilungseinheit (z.B. Frequenzweiche, Leistungsteiler und/ oder Schalter)
44 Leistungsdetektor
45 breitbandiger Signalzweig
52a Bandpassfilter
5 Verstärkungseinheit
61 Signalaufteilungseinheit (z.B. Frequenzweiche, Leistungsteiler und/ oder Schalter)
62 Signalaufteilungseinheit (z.B. Frequenzweiche, Leistungsteiler und/ oder Schalter)
63a bis 63c Verstärkungsschaltungen für Frequenzbereiche a bis c
71a Signalaufteilungseinheit (z.B. Frequenzweiche, Leistungsteiler und/ oder Schalter)
72a Empfangsverstärker
73a Sendeverstärker
74a Signalaufteilungseinheit (z.B. Frequenzweiche, Leistungsteiler und/ oder Schalter)
8 Schaltungsanordnung
9 Koppler
10 Übertragungseinheit

## Patentansprüche

1. Verfahren zur Verstärkung von Funksignalen zwischen einem Endgerät und einer Antenne oder einem Antennenanschluss mithilfe einer Schaltungsanordnung, aufweisend eine Verstärkungseinheit und eine Detektoreinheit, die für unterschiedliche Frequenzbereiche ausgebildete Signalzweige und einen Leistungsdetektor aufweist, umfassend:
- Empfangen (301) eines Sendesignals von dem Endgerät;
- Aufteilen (302) einer Sendesignalleistung des Sendesignals zumindest in einen ersten Signalteil und einen zweiten Signalteil;
- Anlegen (303) des ersten Signalteils an die Signalzweige der Detektoreinheit,
- Ermitteln (304) eines Frequenzbereichs des ersten Signalteils durch zeitlich aufeinanderfolgendes Anlegen der Signalzweige der Detektoreinheit an den Leistungsdetektor zur Auswertung einer Leistung des ersten Signalteils;
- Erkennen von Störsignalen durch Vergleichen einer Leistung an einem angelegten bandspezifischen Signalzweig, der einen Bandpassfilter für Nutzsignale aufweist, mit einer Leistung an einem angelegten Signalzweig, der sowohl die Nutzsignale als auch die zu erkennenden Störsignale unterstützt;
- Einstellen (305) der Signalführung für den zweiten Signalteil in der Verstärkungseinheit basierend auf dem durch die Detektoreinheit ermittelten Frequenzbereich, wobei das Einstellen der Signalführung für den zweiten Signalteil in der Verstärkungseinheit ein Schalten von Signalzweigen, die einen oder mehrere für den ermittelten Frequenzbereich ausgelegte Verstärker aufweisen, umfasst;
- Verstärken (306) von zumindest dem zweiten Signalteil mithilfe der Verstärkungseinheit.

2. Verfahren zur Verstärkung von Funksignalen zwischen einem Endgerät und einer Antenne oder einem Antennenanschluss mithilfe einer Schaltungsanordnung, aufweisend eine Verstärkungseinheit und eine Detektoreinheit, die für unterschiedliche Frequenzbereiche ausgebildete Signalzweige und einen Leistungsdetektor aufweist, umfassend:
- Empfangen (301) eines Sendesignals mit einem ersten Nutzsignal von dem Endgerät:
- Aufteilen (302) einer Sendesignalleistung des Sendesignals zumindest in einen ersten Signalteil und einen zweiten Signalteil;
- Anlegen (303) des ersten Signalteils an die Signalzweige der Detektoreinheit,
- Ermitteln (304) eines Frequenzbereichs des ersten Signalteils durch zeitlich aufeinanderfolgendes Anlegen der Signalzweige der Detektoreinheit an den Leistungsdetektor zur Auswertung einer Leistung des ersten Signalteils;
- Einstellen (305) der Signalführung für den zweiten Signalteil in der Verstärkungseinheit basierend auf dem durch die Detektoreinheit ermittelten Frequenzbereich, wobei das Einstellen der Signalführung für den zweiten Signalteil in der Verstärkungseinheit ein Schalten von Signalzweigen, die einen oder mehrere für den ermittelten Frequenzbereich ausgelegte Verstärker aufweisen, umfasst;
- Verstärken (306) von zumindest dem zweiten Signalteil mithilfe der Verstärkungseinheit;
wobei nach dem Einstellen der Signalführung für den zweiten Signalteil in der Verstärkungseinheit und während dem Verstärken von zumindest dem zweiten Signalteil mithilfe der Verstärkungseinheit, das Verfahren weiterhin umfasst:
- Erkennen eines zweiten Nutzsignals in einem Signalzweig, der für einen Frequenzbereich ausgebildet ist, der sich von dem ermittelten und verstärkten Frequenzbereich unterscheidet; und
- Ermitteln, ob das erste Nutzsignal in dem ermittelten und verstärkten Frequenzbereich weiterhin vorliegt.

3. Verfahren nach Anspruch 2, wobei ein Herausfiltern von Störsignalen dadurch erfolgt, dass eine Leistung bei einem angelegten Signalzweig mit zumindest einem Bandpassfilter mit einer Leistung bei einem angelegten Signalzweig, der breitbandig, beispielsweise ohne Bandpassfilter, ausgelegt ist, verglichen wird.

4. Verfahren nach einem der Ansprüche 1 bis 3, wobei das Sendesignal des Endgeräts über eine Funkschnittstelle oder über ein Kabel empfangen wird.

5. Verfahren nach einem der Ansprüche 1 bis 4, wobei das Aufteilen des Sendesignals ein Aufteilen mithilfe zumindest eines Richtkopplers oder Splitters umfasst.

6. Verfahren nach einem der Ansprüche 1 bis 5, wobei der erste Signalteil des Sendesignals des Endgeräts eine geringere Leistung als der zweite Signalteil aufweist.

7. Verfahren nach einem der Ansprüche 1 bis 6, wobei die für unterschiedliche Frequenzbereiche ausgebildeten Signalzweige jeweils zumindest einen Bandpassfilter aufweisen.

8. Verfahren nach einem der Ansprüche 1 bis 7, wobei der ermittelte Frequenzbereich einem Frequenzbereich eines Funkstandards, insbesondere eines Mobilfunkstandards und/oder eines Standards für lokale Drahtlosnetze, entspricht.

9. Verfahren nach einem der Ansprüche 1 bis 8, wobei das Ermitteln eines Frequenzbereichs des ersten Signalteils kontinuierlich ausgeführt oder aufgrund eines Auslöseereignisses gestartet wird.

10. Verfahren nach einem der Ansprüche 1 bis 9, wobei die für unterschiedliche Frequenzbereiche ausgebildeten Signalzweige der Detektoreinheit jeweils einen oder einen gemeinsamen Hochfrequenzverstärker beinhalten.

11. Verfahren nach einem der Ansprüche 1 bis 10, wobei das Ermitteln eines Frequenzbereichs des ersten Signalteils ein Vergleichen der Signalleistung von zumindest einem der zeitlich aufeinanderfolgend an den Leistungsdetektor angelegten Signale mit einer Schwellwertleistung umfasst.

12. Verfahren nach einem der Ansprüche 1 bis 11, wobei das Ermitteln eines Frequenzbereichs des ersten Signalteils ein Vergleichen der Signalleistung eines ersten der zeitlich aufeinanderfolgend an den Leistungsdetektor angelegten Signale mit einem zweiten der zeitlich aufeinanderfolgend an den Leistungsdetektor angelegten Signale umfasst.

13. Verfahren nach Anspruch 11 oder Anspruch 12, wobei die an dem Leistungsdetektor zeitlich aufeinanderfolgend angelegten Signale jeweils in eine Gleichspannung umgewandelt werden und das Vergleichen mithilfe der umgewandelten Signale erfolgt.

14. Verfahren nach einem der Ansprüche 1 bis 13, wobei sowohl von dem Endgerät gesendete Signale als auch von der Antenne oder an dem Antennenanschluss empfangene Signale mithilfe der Verstärkungseinheit verstärkt werden.

15. Verfahren nach einem der Ansprüche 1 bis 14, wobei die Verstärkung von zumindest dem zweiten Signalteil mithilfe der Verstärkungseinheit derart ausgelegt ist, dass eine Dämpfung der Signalübertragung zwischen dem Endgerät und der Antenne oder dem Antennenanschluss kompensiert wird.

16. Verfahren nach einem der Ansprüche 1 bis 15, wobei nach dem Einstellen der Signalführung für den zweiten Signalteil in der Verstärkungseinheit und bei dem Verstärken von zumindest dem zweiten Signalteil mithilfe der Verstärkungseinheit, das Verfahren weiterhin umfasst:
- Empfangen eines weiteren Sendesignals von dem Endgerät;
- Aufteilen einer Signalleistung des weiteren Sendesignals zumindest in einen ersten weiteren Signalteil und einen zweiten weiteren Signalteil;
- Anlegen des ersten weiteren Signalteils an die Signalzweige der Detektoreinheit,
- Ermitteln eines Frequenzbereichs des ersten weiteren Signalteils durch zeitlich aufeinanderfolgendes Anlegen der Signalzweige der Detektoreinheit an den Leistungsdetektor zur Auswertung einer Leistung des ersten weiteren Signalteils.

17. Verfahren nach einem der Ansprüche 1 bis 16, wobei das zeitlich aufeinanderfolgende Anlegen der Signalzweige der Detektoreinheit durch Schalten der Signalzweige der Detektoreinheit an den Leistungsdetektor ausgeführt wird.

18. Verfahren nach einem der Ansprüche 1 bis 17, weiterhin umfassend:
- Einstellen der Signalverstärkung für den zweiten Signalteil in der Verstärkungseinheit basierend auf der durch die Detektoreinheit ermittelten Leistung.

19. Schaltungsanordnung zur Verstärkung von Funksignalen zwischen einem Endgerät und einer Antenne oder einem Antennenanschluss, aufweisend:
- eine Übertragungseinheit (10), die eingerichtet ist, ein Sendesignal von dem Endgerät zu empfangen;
- ein Aufteilungsmittel (9), das eingerichtet ist, eine Sendesignalleistung des Sendesignals in zumindest einen ersten Signalteil und einen zweiten Signalteil aufzuteilen;
- eine Detektoreinheit (4), die für unterschiedliche Frequenzbereiche ausgebildete Signalzweige und einen Leistungsdetektor aufweist, und eingerichtet ist, den ersten Signalteil an die Signalzweige der Detektoreinheit anzulegen und einen Frequenzbereich des ersten Signalteils durch zeitlich aufeinanderfolgendes Anlegen der Signalzweige der Detektoreinheit an den Leistungsdetektor zur Auswertung einer Leistung des ersten Signalteils zu ermitteln und Störsignale durch Vergleichen einer Leistung an einem bandspezifischen angelegten Signalzweig, der einen Bandpassfilter für Nutzsignale aufweist, mit einer Leistung an einem angelegten Signalzweig, der sowohl die Nutzsignale als auch die zu erkennenden Störsignale unterstützt, zu erkennen;
- eine Steuereinheit (3), die eingerichtet ist, die Signalführung für den zweiten Signalteil in einer Verstärkungseinheit basierend auf dem durch die Detektoreinheit ermittelten Frequenzbereich einzustellen, wobei die Einstellung der Signalführung für den zweiten Signalteil in der Verstärkungseinheit eine Schaltung von Signalzweigen, die einen oder mehrere für den ermittelten Frequenzbereich ausgelegte Verstärker aufweisen, umfasst;
- die Verstärkungseinheit (5), die eingerichtet ist, zumindest den zweiten Signalteil zu verstärken.

20. Schaltungsanordnung zur Verstärkung von Funksignalen zwischen einem Endgerät und einer Antenne oder einem Antennenanschluss, aufweisend:
- eine Übertragungseinheit (10), die eingerichtet ist, ein Sendesignal mit einem ersten Nutzsignal von dem Endgerät zu empfangen;
- ein Aufteilungsmittel (9), das eingerichtet ist, eine Sendesignalleistung des Sendesignals in zumindest einen ersten Signalteil und einen zweiten Signalteil aufzuteilen;
- eine Detektoreinheit (4), die für unterschiedliche Frequenzbereiche ausgebildete Signalzweige und einen Leistungsdetektor aufweist, und eingerichtet ist, den ersten Signalteil an die Signalzweige der Detektoreinheit anzulegen und einen Frequenzbereich des ersten Signalteils durch zeitlich aufeinanderfolgendes Anlegen der Signalzweige der Detektoreinheit an den Leistungsdetektor zur Auswertung einer Leistung des ersten Signalteils zu ermitteln;
- eine Steuereinheit (3), die eingerichtet ist, die Signalführung für den zweiten Signalteil in einer Verstärkungseinheit basierend auf dem durch die Detektoreinheit ermittelten Frequenzbereich einzustellen, wobei die Einstellung der Signalführung für den zweiten Signalteil in der Verstärkungseinheit eine Schaltung von Signalzweigen, die einen oder mehrere für den ermittelten Frequenzbereich ausgelegte Verstärker aufweisen, umfasst;
- die Verstärkungseinheit (5), die eingerichtet ist, zumindest den zweiten Signalteil zu verstärken
wobei nachdem die Signalführung für den zweiten Signalteil in der Verstärkungseinheit eingestellt ist und während zumindest der zweite Signalteil mithilfe der Verstärkungseinheit verstärkt wird:
- die Detektoreinheit (4) ferner eingerichtet ist, ein zweites Nutzsignal in einem Signalzweig zu erkennen, der für einen Frequenzbereich ausgebildet ist, der sich von dem ermittelten und verstärkten Frequenzbereich unterscheidet; und
- zu ermitteln, ob das erste Nutzsignal in dem ermittelten und verstärkten Frequenzbereich weiterhin vorliegt.

21. Schaltungsanordnung nach Anspruch 19 oder 20, wobei die Schaltung ferner eingerichtet ist, das Verfahren gemäß einem der Ansprüche 3 bis 18 auszuführen.

## Claims

1. A method for amplifying radio signals between a terminal and an antenna or antenna connector by means of a circuit arrangement comprising an amplification unit and a detector unit having signal paths designed for different frequency ranges and a power detector, comprising
- receiving (301) a transmission signal from the terminal;
- dividing (302) a transmission signal power of the transmission signal at least into a first signal part and a second signal part;
- applying (303) the first signal part to the signal paths of the detector unit,
- determining (304) a frequency range of the first signal part by applying the signal paths of the detector unit to the power detector in time sequence to evaluate a power of the first signal part;
- detecting disturbing signals by comparing a power on a band-specific applied signal path, which has a bandpass filter for useful signals, with a power on an applied signal path which supports both the useful signals and the disturbing signals to be detected;
- adjusting (305) the signal routing for the second signal part in the amplification unit based on the frequency range determined by the detector unit, wherein adjusting the signal routing for the second signal part in the amplification unit comprises switching signal paths having one or more amplifiers designed for the determined frequency range;
- amplifying (306) at least the second signal part using the amplification unit.

2. A method for amplifying radio signals between a terminal and an antenna or an antenna connector by means of a circuit arrangement comprising an amplification unit and a detector unit having signal paths designed for different frequency ranges and a power detector, comprising:
- receiving (301) a transmitted signal with a first useful signal from the terminal;
- dividing (302) a transmission signal power of the transmission signal at least into a first signal part and a second signal part;
- applying (303) the first signal part to the signal paths of the detector unit,
- determining (304) a frequency range of the first signal part by applying the signal paths of the detector unit to the power detector in time sequence to evaluate a power of the first signal part;
- adjusting (305) the signal routing for the second signal part in the amplification unit based on the frequency range determined by the detector unit, wherein adjusting the signal routing for the second signal part in the amplification unit comprises switching signal paths having one or more amplifiers designed for the determined frequency range;
- amplifying (306) at least the second signal part using the amplification unit;
wherein after adjusting the signal routing for the second signal part in the amplification unit and while amplifying at least the second signal part using the amplification unit, the method further comprises:
- detecting a second useful signal in a signal path designed for a frequency range different from the determined and amplified frequency range; and
- determining whether the first useful signal is still present in the determined and amplified frequency range.

3. The method according to claim 2, wherein disturbing signals are filtered out by comparing a power in an applied signal path with at least one bandpass filter with a power in an applied signal path which is designed to be broadband, for example without a bandpass filter.

4. The method according to one of claims 1 to 3, wherein the transmission signal of the terminal is received via a radio interface or via a cable.

5. The method according to one of claims 1 to 4, wherein dividing of the transmission signal comprises dividing by means of at least one directional coupler or splitter.

6. The method according to one of claims 1 to 5, wherein the first signal part of the transmission signal of the terminal device has a lower power than the second signal part.

7. The method according to one of claims 1 to 6, wherein the signal paths designed for different frequency ranges each have at least one bandpass filter.

8. The method according to one of claims 1 to 7, wherein the determined frequency range corresponds to a frequency range of a radio standard, in particular a mobile radio standard and/or a standard for local wireless networks.

9. The method according to one of claims 1 to 8, wherein determining of a frequency range of the first signal part is carried out continuously or is started due to a triggering event.

10. The method according to any one of claims 1 to 9, wherein the signal paths of the detector unit designed for different frequency ranges each comprise one or comprise a common high-frequency amplifier.

11. The method according to one of claims 1 to 10, wherein determining of a frequency range of the first signal part comprises comparing a signal power of at least one of the signals applied to the power detector in time sequence with a threshold power.

12. The method according to any one of claims 1 to 11, wherein determining a frequency range of the first signal part comprises comparing the signal power of a first one of the signals applied to the power detector in time sequence with a second one of the signals applied to the power detector in time sequence.

13. The method according to claim 11 or claim 12, wherein the signals applied to the power detector in time sequence are each converted into a DC voltage and the comparison is performed based on the converted signals.

14. The method according to any one of claims 1 to 13, wherein both signals transmitted from the terminal device and signals received from the antenna or at the antenna connector are amplified by means of the amplification unit.

15. The method according to one of claims 1 to 14, wherein the amplification of at least the second signal part by means of the amplification unit is such that an attenuation of the signal transmission between the terminal and the antenna or the antenna connector is compensated.

16. The method according to one of claims 1 to 15, wherein after adjusting the signal routing for the second signal part in the amplification unit and amplifying at least the second signal part by means of the amplification unit, the method further comprises
- receiving a further transmission signal from the terminal;
- dividing a signal power of the further transmitted signal at least into a first further signal part and a second further signal part;
- applying the first further signal part to the signal paths of the detector unit,
- determining a frequency range of the first further signal part by applying the signal paths of the detector unit to the power detector in time sequence to evaluate a power of the first further signal part.

17. The method according to one of claims 1 to 16, wherein applying the signal paths of the detector unit in time sequence is carried out by switching the signal paths of the detector unit to the power detector.

18. The method according to any one of claims 1 to 17, further comprising:
- adjusting the signal gain for the second signal part in the amplification unit based on the power detected by the detector unit.

19. A circuit arrangement for amplifying radio signals between a terminal and an antenna or antenna connector, comprising:
- a transmission unit (10) configured to receive a transmission signal from the terminal;
- a dividing means (9) configured to divide a transmission signal power of the transmission signal into at least a first signal part and a second signal part;
- a detector unit (4) having signal paths designed for different frequency ranges and a power detector and configured to apply the first signal part to the signal paths of the detector unit and to determine a frequency range of the first signal part by applying the signal paths of the detector unit to the power detector in time sequence to evaluate a power of the first signal part and to detect disturbing signals by comparing a power on a band-specific applied signal path, which has a bandpass filter for useful signals, with a power on an applied signal path which supports both the useful signals and the disturbing signals to be detected;
- a control unit (3) configured to adjust the signal routing for the second signal part in an amplification unit based on the frequency range determined by the detector unit, wherein adjusting the signal routing for the second signal part in the amplification unit comprises switching signal paths having one or more amplifiers designed for the determined frequency range;
- the amplification unit (5) configured to amplify at least the second signal part.

20. A circuit arrangement for amplifying radio signals between a terminal and an antenna or antenna connector, comprising:
- a transmission unit (10) configured to receive a transmission signal comprising a first useful signal from the terminal;
- a dividing means (9) configured to divide a transmission signal power of the transmission signal into at least a first signal part and a second signal part;
- a detector unit (4) having signal paths designed for different frequency ranges and a power detector and configured to apply the first signal part to the signal paths of the detector unit and to determine a frequency range of the first signal part by applying the signal paths of the detector unit to the power detector in time sequence to evaluate a power of the first signal part;
- a control unit (3) configured to adjust the signal routing for the second signal part in an amplification unit based on the frequency range determined by the detector unit, wherein adjusting the signal routing for the second signal part in the amplification unit comprises switching signal paths having one or more amplifiers designed for the determined frequency range;
- the amplification unit (5) adapted to amplify at least the second signal part
wherein after the signal routing for the second signal part is adjusted in the amplification unit and while at least the second signal part is amplified by means of the amplification unit:
- the detector unit (4) is further configured to detect a second useful signal in a signal path designed for a frequency range different from the determined and amplified frequency range; and
- to determine whether the first useful signal is still present in the determined and amplified frequency range.

21. The circuit arrangement according to claim 19 or 20, wherein the circuit is further configured to perform the method according to one of claims 3 to 18.

## Revendications

1. Procédé pour amplifier des signaux radio entre un terminal et une antenne ou un raccordement d'antenne au moyen d'un dispositif de circuit présentant une unité d'amplification et une unité de détecteur qui présente des branches de signal réalisées pour différentes plages de fréquences et un détecteur de puissance, comprenant les étapes consistant à :
- recevoir (301) un signal d'émission en provenance du terminal ;
- diviser (302) une puissance de signal d'émission du signal d'émission au moins en une première partie de signal et une seconde partie de signal ;
- appliquer (303) la première partie de signal aux branches de signal de l'unité de détecteur,
- déterminer (304) une plage de fréquences de la première partie de signal en appliquant successivement dans le temps les branches de signal de l'unité de détecteur au détecteur de puissance pour évaluer une puissance de la première partie de signal ;
- détecter des signaux parasites en comparant une puissance au niveau d'une branche de signal appliquée spécifique à la bande, qui présente un filtre passe-bande pour signaux utiles, avec une puissance au niveau d'une branche de signal appliquée qui supporte à la fois les signaux utiles et les signaux parasites à détecter ;
- régler (305) le guidage de signal pour la seconde partie de signal dans l'unité d'amplification sur la base de la plage de fréquences déterminée par l'unité de détecteur, dans lequel le réglage du guidage de signal pour la seconde partie de signal dans l'unité d'amplification comprend une commutation de branches de signal qui présentent un ou plusieurs amplificateurs conçus pour la plage de fréquences déterminée ;
- amplifier (306) au moins la seconde partie de signal à l'aide de l'unité d'amplification.

2. Procédé pour amplifier des signaux radio entre un terminal et une antenne ou un raccordement d'antenne au moyen d'un dispositif de circuit présentant une unité d'amplification et une unité de détecteur qui présente des branches de signal réalisées pour différentes plages de fréquences et un détecteur de puissance, comprenant les étapes consistant à :
- recevoir (301) un signal d'émission avec un premier signal utile en provenance du terminal ;
- diviser (302) une puissance de signal d'émission du signal d'émission au moins en une première partie de signal et une seconde partie de signal ;
- appliquer (303) la première partie de signal aux branches de signal de l'unité de détecteur.
- déterminer (304) une plage de fréquences de la première partie de signal en appliquant successivement dans le temps les branches de signal de l'unité de détecteur au détecteur de puissance pour évaluer une puissance de la première partie de signal ;
- régler (305) le guidage de signal pour la seconde partie de signal dans l'unité d'amplification sur la base de la plage de fréquences déterminée par l'unité de détecteur, dans lequel le réglage du guidage de signal pour la seconde partie de signal dans l'unité d'amplification comprend une commutation de branches de signal qui présentent un ou plusieurs amplificateurs conçus pour la plage de fréquences déterminée ;
- amplifier (306) au moins la seconde partie de signal à l'aide de l'unité d'amplification ;
dans lequel, après la mise en œuvre du guidage de signal pour la seconde partie de signal dans l'unité d'amplification et pendant l'amplification d'au moins la seconde partie de signal à l'aide de l'unité d'amplification, le procédé comprend en outre les étapes consistant à :
- détecter un second signal utile dans une branche de signal qui est réalisée pour une plage de fréquences différente de la gamme de fréquences détectée et amplifiée ; et
- déterminer si le premier signal utile est toujours présent dans la plage de fréquences détectée et amplifiée.

3. Procédé selon la revendication 2, dans lequel le filtrage de signaux parasites est effectué en comparant une puissance au niveau d'une branche de signal appliquée avec au moins un filtre passe-bande avec une puissance au niveau d'une branche de signal appliquée qui est conçue pour être à large bande, par exemple sans filtre passe-bande.

4. Procédé selon l'une quelconque des revendications 1 à 3, dans lequel le signal d'émission du terminal est reçu par l'intermédiaire d'une interface radio ou par l'intermédiaire d'un câble.

5. Procédé selon l'une quelconque des revendications 1 à 4, dans lequel la division du signal d'émission comprend une division à l'aide d'au moins un coupleur directionnel ou séparateur.

6. Procédé selon l'une quelconque des revendications 1 à 5, dans lequel la première partie de signal du signal d'émission du terminal présente une puissance inférieure à celle de la seconde partie de signal.

7. Procédé selon l'une quelconque des revendications 1 à 6, dans lequel les branches de signal réalisées pour différentes plages de fréquences présentent respectivement au moins un filtre passe-bande.

8. Procédé selon l'une quelconque des revendications 1 à 7, dans lequel la plage de fréquences déterminée correspond à une plage de fréquences d'une norme radio, en particulier une norme radio mobile et/ou une norme de réseau sans fil local.

9. Procédé selon l'une quelconque des revendications 1 à 8, dans lequel la détermination d'une plage de fréquences de la première partie de signal est effectuée en continu ou est lancée sur la base d'un événement déclencheur.

10. Procédé selon l'une quelconque des revendications 1 à 9, dans lequel les branches de signal de l'unité de détecteur réalisées pour des plages de fréquences différentes contiennent respectivement un amplificateur haute fréquence ou un amplificateur haute fréquence commun.

11. Procédé selon l'une quelconque des revendications 1 à 10, dans lequel la détermination d'une plage de fréquences de la première partie de signal comprend une comparaison de la puissance de signal d'au moins un des signaux appliqués successivement dans le temps au détecteur de puissance avec une puissance de valeur seuil.

12. Procédé selon l'une quelconque des revendications 1 à 11, dans lequel la détermination d'une plage de fréquences de la première partie de signal comprend une comparaison de la puissance de signal d'un premier des signaux appliqués successivement dans le temps au détecteur de puissance avec un second des signaux appliqués successivement dans le temps au détecteur de puissance.

13. Procédé selon la revendication 11 ou 12, dans lequel les signaux appliqués successivement dans le temps au détecteur de puissance sont respectivement convertis en une tension continue et la comparaison est effectuée à l'aide des signaux convertis.

14. Procédé selon l'une quelconque des revendications 1 à 13, dans lequel les signaux à la fois émis par le terminal et les signaux reçus par l'antenne ou au niveau du raccordement d'antenne sont amplifiés à l'aide de l'unité d'amplification.

15. Procédé selon l'une quelconque des revendications 1 à 14, dans lequel l'amplification d'au moins la seconde partie de signal à l'aide de l'unité d'amplification est conçue de sorte à compenser l'atténuation de la transmission de signal entre le terminal et l'antenne ou le raccordement d'antenne.

16. Procédé selon l'une quelconque des revendications 1 à 15, dans lequel, après le réglage du guidage de signal pour la seconde partie de signal dans l'unité d'amplification et lors de l'amplification d'au moins la seconde partie de signal à l'aide de l'unité d'amplification, le procédé comprend en outre les étapes consistant à :
- recevoir un signal d'émission supplémentaire en provenance du terminal ;
- diviser une puissance de signal du signal d'émission supplémentaire au moins en une première partie de signal supplémentaire et une seconde partie de signal supplémentaire ;
- appliquer la première partie de signal supplémentaire aux branches de signal de l'unité de détecteur,
- déterminer une plage de fréquences de la première partie de signal supplémentaire en appliquant successivement dans le temps les branches de signal de l'unité de détecteur au détecteur de puissance pour évaluer une puissance de la première partie de signal supplémentaire.

17. Procédé selon l'une quelconque des revendications 1 à 16, dans lequel l'application des branches de signal de l'unité de détecteur successivement dans le temps est effectuée en commutant les branches de signal de l'unité de détecteur sur le détecteur de puissance.

18. Procédé selon l'une quelconque des revendications 1 à 17, comprenant en outre l'étape consistant à :
- régler l'amplification de signal pour la seconde partie de signal dans l'unité d'amplification sur la base de la puissance déterminée par l'unité de détecteur.

19. Dispositif de circuit pour amplifier des signaux radio entre un terminal et une antenne ou un raccordement d'antenne, présentant :
- une unité de transmission (10) qui est configurée pour recevoir un signal d'émission en provenance du terminal ;
- un moyen de division (9) qui est configuré pour diviser une puissance de signal d'émission du signal d'émission en au moins une première partie de signal et une seconde partie de signal ;
- une unité de détecteur (4) qui présente des branches de signal réalisées pour différentes plages de fréquences et un détecteur de puissance, et est configurée pour appliquer la première partie de signal aux branches de signal de l'unité de détecteur et pour déterminer une plage de fréquences de la première partie de signal en appliquant les branches de signal de l'unité de détecteur au détecteur de puissance successivement dans le temps pour évaluer une puissance de la première partie de signal, et pour détecter des signaux parasites en comparant une puissance au niveau d'une branche de signal appliquée spécifique à la bande, qui présente un filtre passe-bande pour signaux utiles, avec une puissance sur une branche de signal appliquée qui supporte à la fois les signaux utiles et les signaux parasites à détecter ;
- une unité de commande (3) qui est configurée pour régler le guidage de signal pour la seconde partie de signal dans une unité d'amplification sur la base de la plage de fréquences détectée par l'unité de détecteur, dans lequel le réglage du guidage de signal pour la seconde partie de signal dans l'unité d'amplification comprend un circuit de branches de signal qui présentent un ou plusieurs amplificateurs conçus pour la plage de fréquences détectée ;
- l'unité d'amplification (5) qui est configurée pour amplifier au moins la seconde partie de signal.

20. Dispositif de circuit pour amplifier des signaux radio entre un terminal et une antenne ou un raccordement d'antenne, présentant :
- une unité de transmission (10) qui est configurée pour recevoir un signal d'émission avec un premier signal utile en provenance du terminal ;
- un moyen de division (9) qui est configuré pour diviser une puissance de signal d'émission du signal d'émission en au moins une première partie de signal et une seconde partie de signal ;
- une unité de détecteur (4) qui présente des branches de signal réalisées pour différentes plages de fréquences et un détecteur de puissance, et qui est configuré pour appliquer la première partie de signal aux branches de signal de l'unité de détecteur et pour déterminer une plage de fréquences de la première partie de signal en appliquant les branches de signal de l'unité de détecteur au détecteur de puissance successivement dans le temps pour évaluer une puissance de la première partie de signal ;
- une unité de commande (3) qui est configurée pour régler le guidage de signal pour la seconde partie de signal dans une unité d'amplification sur la base de la plage de fréquences détectée par l'unité de détecteur, dans lequel le réglage du guidage de signal pour la seconde partie de signal dans l'unité d'amplification comprend un circuit de branches de signal qui présentent un ou plusieurs amplificateurs conçus pour la plage de fréquences détectée ;
- l'unité d'amplification (5) qui est configurée pour amplifier au moins la seconde partie de signal
dans lequel, après que le guidage de signal pour la seconde partie de signal est réglé dans l'unité d'amplification et pendant qu'au moins la seconde partie de signal est amplifiée à l'aide de l'unité d'amplification :
- l'unité de détecteur (4) est en outre configurée pour détecter un second signal utile dans une branche de signal qui est réalisée pour une plage de fréquences qui est différente de la plage de fréquences détectée et amplifiée ; et
- pour déterminer si le premier signal utile est toujours présent dans la plage de fréquences détectée et amplifiée.

21. Dispositif de circuit selon la revendication 19 ou 20, dans lequel le circuit est en outre configuré pour mettre en œuvre le procédé selon l'une quelconque des revendications 3 à 18.
